(19) Europäisches Patentamt
European Patent Office
Office européen des brevets

(11) **EP 4 542 177 A1**

(12) **EUROPEAN PATENT APPLICATION**
published in accordance with Art. 153(4) EPC

(43) Date of publication:
**23.04.2025 Bulletin 2025/17**

(21) Application number: **23823908.1**

(22) Date of filing: **12.06.2023**

(51) International Patent Classification (IPC):
**G01D 5/20** (2006.01)

(52) Cooperative Patent Classification (CPC):
**G01D 5/20**

(86) International application number:
**PCT/JP2023/021804**

(87) International publication number:
**WO 2023/243618 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.06.2022 JP 2022095845**

(71) Applicant: **Oriental Motor Co., Ltd.
Tokyo 111-0056 (JP)**

(72) Inventors:
• **NARISAWA, Kota
Tsukuba-shi, Ibaraki 300-2635 (JP)**
• **HOUDA, Akihiko
Tsukuba-shi, Ibaraki 300-2635 (JP)**

(74) Representative: **Witte, Weller & Partner
Patentanwälte mbB
Postfach 10 54 62
70047 Stuttgart (DE)**

(54) **INDUCTIVE POSITION DETECTOR**

(57) The inductive position detector (100) includes: a stator (1) having a wiring board (10); a rotor (2) having a non-conductive component (21) disposed in opposed relation to the stator (1) and rotatable relative to the stator (1) about a rotation axis (3a); a conductor pattern (T) held by the non-conductive component (21) so as to have cyclicity (geometrical periodicity) circumferentially about the rotation axis (3a), and movable to pass through a rotation track defined about the rotation axis (3a) as the rotor (2) is rotated; and a plurality of chip inductors (L) surface-mounted on a major surface of the wiring board (10) of the stator (1) in opposed relation to the rotation track so as to have different spatial phases with respect to the conductor pattern (T), and respectively serving as detection coils that detect a magnetic field change occurring due to the passage of the conductor pattern (T).

FIG. 1

**Description**

RELATED APPLICATION

This application claims the benefit of priority to Japanese Patent Application No. 2022-95845, filed on June 14, 2022, the disclosure of which is entirely incorporated herein by reference.

TECHNICAL FIELD

The present invention relates to an inductive position detector.

BACKGROUND ART

Position detectors to be used to detect a rotational position are based on various detection systems such as of an optical type, a magnetic type, an electrostatic capacitance type, a resolver type and an induction type. Position detectors of the induction type are adapted to move a movable portion holding a conductor in an AC magnetic field and detect a magnetic field change caused by electric current induced in the conductor. The position detectors of the induction type are less liable to be affected by dust, dirt and an external magnetic field and, therefore, are excellent in environmental stability. In addition, the position detectors of the induction type can be reduced in size and thickness with a simple configuration, and the costs thereof are relatively low.

Such position detectors of the induction type are disclosed, for example, in PTL 1 to PTL 4.

PTL 1 and PTL 4 disclose configurations each including an excitation coil and a detection coil provided in the form of conductor patterns on a printed wiring board, and configured so that a conductor target is movable relative to the detection coil. A voltage induced in the detection coil by an AC magnetic field generated by the excitation coil is changed according to a positional relationship between the detection coil and the conductor target. Thus, the position of the conductor target can be detected.

PTL 2 discloses a configuration including a detection coil provided in the form of a conductor pattern on a printed wiring board, and adapted to apply an AC voltage to the detection coil and detect an inductance change of the detection coil when a conductor target is moved relative to the detection coil.

PTL 3 discloses a configuration including an excitation coil and a detection coil provided in the form of conductor patterns on a silicon substrate. The detection principle is substantially the same as those disclosed in PTL 1 and PTL 4.

CITATION LIST

PATENT LITERATURE

PTL 1: JP S61(1986)-159101 A
PTL 2: JP 5226694
PTL 3: JP 5300164
PTL 4: JP 2021-56176 A
PTL 5: JP 2000-49014 A

SUMMARY OF INVENTION

PROBLEMS TO BE SOLVED BY INVENTION

For the position detectors adapted to detect the rotational position, very important factors are size, resolution and accuracy. The number of detection cycles per rotation is referred to as shaft angle multiplier. When one conductor target passes through one detection coil, a one-cycle detection signal is provided. A greater shaft angle multiplier improves the resolution, making it easier to improve the accuracy. In order to increase the shaft angle multiplier, it is necessary to increase the number of conductor targets to be disposed circumferentially about a rotation axis. Therefore, the pitch of the conductor targets needs to be reduced in order to provide a position detector having a higher resolution and a higher accuracy with a smaller size.

If the pitch of the conductor targets is reduced, the size of the detection coil needs to be correspondingly reduced. If the size of the detection coil is reduced, the interlinkage flux number is reduced and, therefore, a signal voltage to be detected is reduced. This reduces a signal-to-noise ratio (S/N ratio), making it difficult to accurately detect the position.

Therefore, it is desirable to increase the number of turns of the detection coil as much as possible to provide a sufficient signal voltage.

Where the detection coil is provided in the form of the conductor pattern on the printed wiring board, a signal processing circuit can be provided on the same printed board, reducing additional costs. Further, the printed wiring board requires smaller initial costs for the production thereof and, therefore, is advantageous for small-volume production of various products, allowing for more flexible design.

Examples of the production of the detection coil in the form of the conductor pattern on the printed wiring board are shown in FIG. 52 of PTL 1 and in FIG. 9 of PTL 2. In these examples, the detection coil is produced in the form of a spiral conductor pattern. If it is desirable to increase the turn number of the detection coil, a multilayer printed wiring board may be used, which is configured so that spiral conductor patterns respectively provided in plural wiring layers are connected to each other via via-holes. However, there are limitations in pattern width, pattern spacing, via-hole diameter and the like, making it difficult to produce a smaller coil having a greater turn number. If the number of the wiring layers is increased to increase the turn number, therefore, cost increase will result.

In the formation of the conductor pattern on the silicon substrate by utilizing a semiconductor production process as in PTL 3, the pattern width, the pattern spacing, the via-hole diameter and the like can be made finer than in the formation of the conductor pattern on the printed wiring board. This makes it possible to produce very small detection coils. However, the semiconductor production process requires a large amount of initial costs, and is less flexible and is not suitable for the small-volume production of various products. Further, the silicon substrate has a limited size, so that the detection coils need to be densely disposed. Therefore, the detection is possible only on a part of a circle defined about the rotation axis. If a plurality of elements are used, the detection is possible at positions located circumferentially equivalently on the circle. However, this design is not realistic from the viewpoint of the costs.

Examples of the coil shape other than the spiral shape include a detection coil shape such that pattern portions of the conductor pattern cross each other into an 8-shape to form rings as proposed in FIG. 15 of PTL 1, and a meander shape having a Vernier effect as proposed in FIG. 2 of PTL 4. In these coil shapes, a one-turn coil is defined by a portion surrounded by a forward pattern portion and a reverse pattern portion of the conductor pattern. A coil having one or more turns can be formed by pluralities of forward and reverse pattern portions. However, it is difficult to produce a coil having a greater turn number and a size such that the coil can be disposed in a smaller pitch between adjacent conductor targets. Further, two or more detection coils that can output signals having different phases are preferably provided for the detection of the rotational position. In the case of the 8-shaped pattern or the meander-shaped pattern, however, two detection coils cannot be provided on the same circle in a single wiring layer. Therefore, it is necessary to provide the two detection coils in different wiring layers, or to provide the two detection coils at different radius positions (having different distances from the rotation axis) in the same wiring layer. However, the two detection coils provided in the different wiring layers have different distances from the conductor targets. Further, the conductor targets are each configured in a fan shape defined about the rotation axis and, hence, each have different widths as measured circumferentially about the rotation axis depending on the radius position. Therefore, the two detection coils provided at the different radius positions, **i.e.,** a radially inner detection coil and a radially outer detection coil, are substantially different in the area of an opposition region to be opposed to each of the conductor targets. In either case, the outputs of the detection coils are liable to be unbalanced, thereby requiring special signal processing.

In addition, the configuration shown in FIG. 2 of PTL 4 requires a design for offset balance, because a plus signal and a minus signal are respectively detected outward and inward of a circle even if having the same phase. Therefore, it is difficult to design a pattern configuration that can ensure a required accuracy.

Where a position detector is used to control an electric motor, on the other hand, the rotor of the position detector is generally attached to the non-output end of the motor shaft of the electric motor. With the electric motor incorporated in a device utilizing its driving force, a radial load is often applied to the motor shaft, whereby the motor shaft is liable to warp with its axis misaligned at the non-output end. Where the detection is carried out only on a part of the circle defined about the rotation axis as in PTL 2 and PTL 3, the motor control is adversely influenced because the misalignment of the axis results in the offset of the detection position.

One example embodiment of the present invention provides an inductive position detector that can solve at least one of the problems described above.

More specifically, the example embodiment of the present invention provides an inductive position detector that has a higher design flexibility, a smaller size and a higher detection resolution.

SOLUTION TO PROBLEMS

The example embodiment of the present invention provides an inductive position detector having any of the following features.

  1. An inductive position detector includes: a stator having a wiring board; a rotor having a non-conductive component disposed in opposed relation to the stator and rotatable relative to the stator about a predetermined rotation axis; a plurality of conductor targets having the same shape and the same size and held by the non-conductive component of the rotor to be cyclically arranged circumferentially about the rotation axis, the conductor targets being movable to pass through a rotation track defined about the rotation axis as the rotor is rotated; and a plurality of chip inductors surface-mounted on a major surface of the wiring board of the stator in opposed relation to the rotation track so as to have different spatial phases with respect to the conductor targets, and respectively serving as detection coils that detect a magnetic field change occurring due to the passage of the conductor targets.

When the rotor is rotated about the rotation axis, the conductor targets held by the non-conductive component (typically, an insulative component, e.g., an insulative board) of the rotor are moved to pass through the rotation track defined about the rotation axis. The chip inductors respectively serving as the detection coils are disposed on the major surface (mount surface) of the wiring board of the stator in opposed relation to the rotation track of the conductor targets. The chip inductors detect the magnetic field change occurring due to the passage of the conductor targets. That is, the chip inductors respectively output signals indicating the magnetic field change. The chip inductors have different spatial phases with respect to the conductor targets and, therefore, output different phase signals as the rotor is rotated. Thus, the relative rotational position of the rotor with respect to the stator can be detected by processing the output signals of the chip inductors.

The chip inductors are electrical components that are smaller in size and yet can be increased in turn number and can be procured at lower costs in the market. Where an attempt is made to increase the detection resolution by increasing the number of the conductor targets to increase the number of poles, therefore, a layout for a shorter cycle of the conductor targets (a smaller pitch of the conductor targets) is possible without excessively reducing the detection signals without the need for excessively great costs. In addition, industrially mass-produced chip inductors are highly uniform in performance. Therefore, uniform detection signals can be obtained from the plurality of chip inductors, obviating the need for complicated signal processing.

Unlike in the arrangement including the plurality of detection coils formed on the silicon substrate by the semiconductor production process, the chip inductors (which are separate elements) can be disposed at any desired positions in opposed relation to the rotation track, allowing for highly flexible layout. Therefore, the chip inductors can be laid out entirely circumferentially of the rotation track. This entirely circumferential layout makes it easier to cope with the axis misalignment of the rotation shaft connected to the rotor. Since the chip inductors are smaller in size, the entirely circumferential layout can be achieved even in an arrangement designed to increase the resolution by reducing the cycle of the conductor targets.

The inductive position detector thus provided has a higher design flexibility, a smaller size and a higher detection resolution.

Typically, the conductor targets have the same length as measured along the rotation track. For example, the conductor targets having the same shape and the same size are arranged rotationally symmetrically about the rotation axis.

The chip inductors may be mounted on one major surface (i.e., on the same major surface) of the wiring board of the stator. Thus, distances from the chip inductors to the conductor targets can be made uniform, so that outputs from the chip inductors can be made uniform. Typically, the chip inductors are surface-mounted on the major surface of the wiring board opposed to the rotor. Thereby, the chip inductors can be disposed closer to the conductor targets, making it possible to increase the output changes of the chip inductors occurring due to the passage of the conductor targets. Alternatively, the chip inductors may be mounted on a major surface of the wiring board opposite from the rotor. Even in this case, the distances from the chip inductors to the conductor targets are substantially equal to each other, though the wiring board is interposed between the chip inductors and the conductor targets.

The chip inductors may include chip inductors surface-mounted on one of opposite major surfaces of the wiring board, and chip inductors surface-mounted on the other major surface of the wiring board. By thus mounting the chip inductors on the opposite surfaces of the wiring board, the number of the chip inductors to be mounted can be increased and, for example, to be doubled. As the number of the chip inductors increases, the total turn number is increased, making it possible to increase the outputs. Further, as the number of the chip inductors increases, variations among the chip inductors are leveled off, making it possible to increase the detection accuracy. On each of the one major surface and the other major surface of the wiring board, distances from the chip inductors to the conductor targets are equal to each other. Thus, the outputs of the chip inductors disposed on each of the opposite major surfaces can be leveled off. This obviates the need for complicated signal processing.

2. In the inductive position detector according to Item 1, the conductor targets are arranged at a predetermined conductor target pitch along the rotation track, and the chip inductors each have a coil width that is 25% to 75% of the conductor target pitch as measured along the rotation track.

With this arrangement, the coil width of each of the chip inductors as measured along the rotation track is 25% to 75% (not less than 25% and not greater than 75%) of the conductor target pitch. Thus, the chip inductors are each capable of outputting a detection signal that properly changes due to the passage of the conductor targets. Even if the detection resolution is increased by increasing the number of the conductor targets with the use of industrially-produced small-size chip inductors and the conductor target pitch is correspondingly reduced, the position detector for the detection of the rotational position can be configured by employing the chip inductors each having a coil width that is 25% to 75% of the conductor target pitch. The coil width of each of the chip inductors is preferably about 50% of the conductor target pitch, but the detection can be properly achieved if the coil width is 25% to 75% of the conductor target pitch. Therefore, the chip inductors can be easily selected from standardized chip inductors supplied to the market. Even where the coil width of each of the chip inductors is 50% of the conductor target pitch, ideal conditions cannot necessarily be achieved. Optimum design conditions depend upon the shaft angle multiplier, the size, the rotor-to-stator gap and other factors of the position detector.

3. In the inductive position detector according to Item 1 or 2, the conductor targets are arranged at a predetermined conductor target pitch along the rotation track, and the chip inductors include at least one first-phase chip inductor, at least one second-phase chip inductor, at least one third-phase chip inductor and at least one fourth-phase chip inductor which are arranged with a phase difference of one fourth the conductor target pitch and respectively constitute a first phase group, a second phase group, a third phase group and a fourth phase group.

Since the first-phase chip inductor, the second-phase chip inductor, the third-phase chip inductor and the fourth-phase chip inductor are different from each other in spatial phase by 90 degrees with respect to the conductor targets, it is possible to obtain detection signals from the first-phase chip inductor, the second-phase chip inductor, the third-phase chip inductor and the fourth-phase chip inductor to accurately detect the rotational position of the rotor.

The chip inductors may be arranged equidistantly along the rotation track, or may be arranged non-equidistantly along the rotation track. Further, the chip inductors may be arranged entirely circumferentially of the rotation track, or the rotation track may include a region in which the chip inductors are provided, and a region in which no chip inductors are provided.

4. In the inductive position detector according to any one of Items 1 to 3, the chip inductors include 4N chip inductors (wherein N is a natural number) arranged equidistantly along the rotation track entirely circumferentially of the rotation track, and the number $Y$ of the conductor targets (wherein $Y$ is a natural number) satisfies the following expression: $Y = 4NM \pm N$ (wherein M is a natural number).

With this arrangement, the 4N chip inductors are equidistantly arranged entirely circumferentially of the circular track. On the other hand, the number $Y$ of the conductor targets arranged equidistantly along the circular track satisfies the expression $Y = 4NM \pm N$. Then, the 4N chip inductors can be classified into four groups (each including N chip inductors) which are different from each other in spatial phase by 90 degrees with respect to the conductor targets. That is, the 4N chip inductors are classified into a first phase group including N first-phase chip inductors, a second phase group including N second-phase chip inductors, a third phase group including N third-phase chip inductors, and a fourth phase group including N fourth-phase chip inductors. Therefore, detection signals different from each other in phase by 90 degrees can be obtained from the first phase group, the second phase group, the third phase group and the fourth phase group.

5. In the inductive position detector according to any one of Items 1 to 4, a first set of the plurality of chip inductors and the plurality of conductor targets employ a first rotation track as the rotation track, a second set of the plurality of chip inductors and the plurality of conductor targets employ a second rotation track different from the first rotation track as the rotation track, the first set and the second set are provided so as to share the stator and the rotor, and the number $Y_1$ (wherein $Y_1$ is a natural number) of the conductor targets of the first set and the number $Y_2$ (wherein $Y_2$ is a natural number) of the conductor targets of the second set are different from each other.

With this arrangement, the inductive position detector is of a multitrack configuration having the first rotation track and the second rotation track. Since the number $Y_1$ of the conductor targets of the first set on the first rotation track and the number $Y_2$ of the conductor targets of the second set on the second rotation track are different from each other, rotational positions in a wider rotational angle range can be discretely detected.

6. In the inductive position detector according to Item 5, the number $Y_1$ of the conductor targets of the first set and the number $Y_2$ of the conductor targets of the second set are coprime.

With this arrangement, rotational positions in a still wider rotational angle range can be discretely detected. More specifically, absolute detection can be achieved, in which rotational positions in a one-turn range (a 360-degree range) can be discretely detected.

7. The inductive position detector according to Item 5 or 6 further includes an excitation coil provided in the wiring board of the stator and shared by the chip inductors of the first set and the chip inductors of the second set to induce voltages in the chip inductors of the first set and the chip inductors of the second set.

With this arrangement, the common excitation coil can be used for excitation of the chip inductors of the first set and the second set, thereby simplifying the configuration.

8. In the inductive position detector according to Item 7, the excitation coil includes a loop-shaped first excitation coil provided so that the chip inductors of the first set and the chip inductors of the second set are located inward of the first excitation coil as seen along the rotation axis, and a loop-shaped second excitation coil provided around the rotation axis so that the second excitation coil is located inward of the chip inductors of the first set and the chip inductors of the second set as seen along the rotation axis.

With this arrangement, the chip inductors of the first set and the second set can be sufficiently excited by the two excitation coils, i.e., an inner excitation coil and an outer excitation coil, making it possible to obtain detection signals of greater amplitudes.

9. In the inductive position detector according to any one of Items 1 to 8, the conductor targets include solid conductor patterns or loop-shaped coil conductor patterns provided on the non-conductive component, and the conductor targets are isolated from each other.

Typically, the conductor targets have the same length as measured along the rotation track. For example, the conductor targets having the same shape and the same size are arranged rotationally symmetrically about the rotation axis. Further, adjacent two of the conductor targets are typically spaced a distance from each other along the rotation track. The distance may be equal to the length of the conductor targets as measured along the rotation track.

10. In the inductive position detector according to any one of Items 1 to 8, the conductor targets are connected to each other to provide a loop-shaped coil conductor pattern extending entirely circumferentially.

In a certain example embodiment, as described above, the individual conductor targets separately equidistantly arranged circumferentially about the rotation axis are held by the non-conductive component of the rotor, and are provided in the form of cyclic (geometrically periodic) conductor patterns. In another example embodiment, the loop-shaped coil conductor pattern extending entirely circumferentially about the rotation axis forms a cyclic (geometrically periodic) conductor pattern so as to provide conductor targets connected to each other.

Therefore, the conductor targets each constitute a one-cycle conductor portion of the cyclic (geometrically periodic) conductor pattern(s) formed circumferentially about the rotation axis. The one-cycle conductor portion is an individual conductor pattern in the certain example embodiment, and is a part of the continuous conductor pattern in the another example embodiment.

11. In the inductive position detector according to any one of Items 1 to 10, the chip inductors are multilayer chip inductors each having a pair of connection electrodes provided on opposite ends thereof.

The use of the multilayer chip inductors makes it possible to provide detection coils each having a smaller size and a greater turn number. Even if the conductor target pitch is reduced and the chip inductors are correspondingly limited in size in order to increase the number of the conductor targets for improvement of the detection resolution, detection signals each having a sufficiently great amplitude can be obtained from the chip inductors. In addition, the entirely circumferential layout can be easily designed, in which the chip inductors are arranged entirely circumferentially of the rotation track.

12. The inductive position detector according to any one of Items 1 to 11 further includes an excitation coil provided in the wiring board of the stator to generate a magnetic field to induce voltages in the chip inductors, and configured in a loop shape such that the chip inductors are located inward of the excitation coil as seen along the rotation axis.

With this arrangement, AC voltages can be induced in the chip inductors by applying an AC voltage to the excitation coil. When the conductor targets pass through the vicinities of the chip inductors in this state, eddy currents induced in the conductor targets by the magnetic field from the excitation coil cancel the magnetic field of the excitation coil. Thereby, the voltages induced in the chip inductors are changed. Thus, the chip inductors output detection signals that are changed due to the passage of the conductor targets.

13. In the inductive position detector according to any one of Items 1 to 12, the chip inductors are connected together to configure an AC bridge circuit having a pair of AC voltage application terminals and a pair of signal detection terminals.

With this arrangement, when an AC voltage is applied between the AC voltage application terminals of the AC bridge circuit including the chip inductors bridge-connected together, detection signals indicating the impedance changes of the chip inductors appear at the signal detection terminals of the AC bridge circuit. Since the impedances of the chip inductors are mostly inductances, it may be considered that the detection signals of the AC bridge circuit indicate the inductance changes of the chip inductors. On the other hand, the inductances of the chip inductors are changed according to a positional relationship between the chip inductors and the conductor targets, so that the inductance changes can be detected based on the detection signals from the AC bridge circuit. Thus, the positions of the conductor targets can be detected. That is, it is possible to detect the rotational position of the rotor that holds the conductor targets on its non-conductive component.

The above and other objects, features and advantages of the present invention will become more apparent from the following description of the example embodiments with reference to the attached drawings.

BRIEF DESCRIPTION OF DRAWINGS

FIG. 1 is an exploded perspective view that describes the configuration of an inductive position detector according to a first example embodiment of the present invention.

FIG. 2 is a side view of the inductive position detector of FIG. 1.

FIG. 3 is a plan view showing the relative layout of conductor targets of a rotor and chip inductors disposed on a stator.

FIG. 4 is an electrical circuit diagram showing the equivalent circuit of the stator.

FIGS. 5A, 5B and 5C are waveform diagrams showing an AC voltage generated by an excitation source and exemplary detection signals with a phase difference of 90 degrees.

FIG. 6 is an exploded perspective view of an inductive position detector according to a second example embodiment of the present invention.

FIG. 7 is a plan view showing the relative layout of conductor targets of a rotor and chip inductors disposed on a stator.

FIG. 8 is an electrical circuit diagram showing the equivalent circuit of the stator.

FIG. 9 is an exploded perspective view showing the configuration of an inductive position detector according to a third example embodiment of the present invention.

FIG. 10 is an electrical circuit diagram showing the equivalent circuit of the stator of the inductive position detector of FIG. 9.

FIG. 11 is an exploded perspective view that describes the configuration of an inductive position detector according to a fourth example embodiment of the present invention.

FIG. 12 is a plan view showing a positional relationship between conductor targets of a rotor and chip inductors disposed on a stator.

FIG. 13 is an electrical circuit diagram showing the equivalent circuit of the stator.

FIG. 14A is a plan view showing an exemplary arrangement including conductor targets provided in the form of coil-shaped conductor patterns.

FIG. 14B is a plan view showing another exemplary arrangement including conductor targets provided in the form of a coil-shaped conductor pattern.

FIGS. 15A to 15E show various types of conductor targets by way of example.

FIGS. 16A to 16D show conductor targets provided by diving a loop-shaped coil conductor pattern that is entirely circumferentially continuous by way of example.

DESCRIPTION OF EXAMPLE EMBODIMENTS

Example embodiments of the present invention will hereinafter be described in detail with reference to the attached drawings.

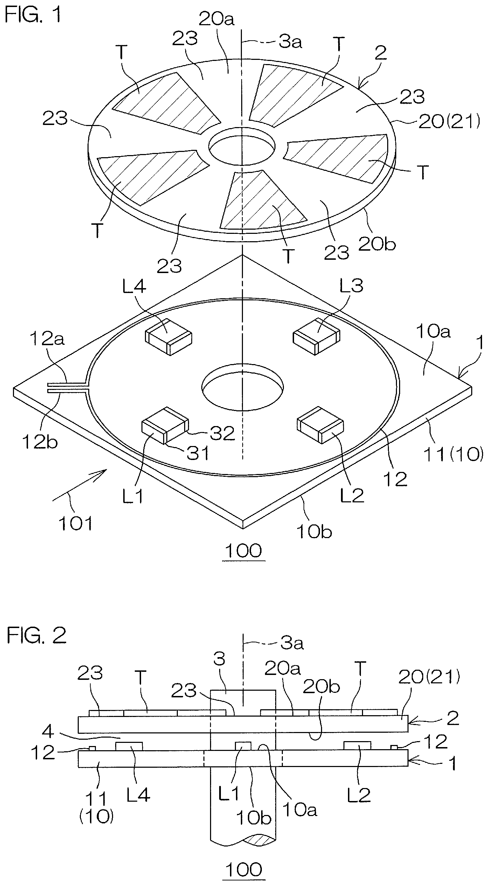

FIG. 1 is an exploded perspective view that describes the configuration of an inductive position detector 100 according to a first example embodiment of the present invention. FIG. 2 is a side view of the inductive position detector 100 as seen in an arrow direction 101.

The inductive position detector 100 includes a stator 1, and a rotor 2 rotatable about a rotation axis 3a relative to the stator 1, and is configured to output a detection signal indicating the rotational position of the rotor 2 about the rotation axis 3a relative to the stator 1. The rotor 2 is connected to a rotation shaft 3 (see FIG. 2) to be subjected to rotational position detection, and is rotatable together with the rotation shaft 3 about the rotation axis 3a. The stator 1 has a printed board 10 (printed wiring board) as the wiring board. The rotor 2 is constituted by another printed board 20 that is spaced a predetermined distance 4 (e.g., 0.1 mm to 1 mm) from the printed board 10.

The printed board 10 of the stator 1 includes an insulative board 11, and a conductor pattern (e.g., a copper foil pattern) provided in at least one of opposite major surfaces 10a, 10b thereof. The printed board 10 may be a multilayer printed board including a plurality of wiring layers (e.g., four wiring layers) stacked one on another. In this case, the conductor pattern is often provided in a wiring layer exposed in neither of the major surfaces 10a, 10b.

Similarly, the printed board 20 of the rotor 2 includes an insulative board 21 as the non-conductive component, and a plurality of conductor targets T provided in the form of conductor patterns (e.g., copper foil patterns) in one of opposite major surfaces 20a, 20b thereof to be thereby held by the insulative board 21. In this example embodiment, the conductor targets T are provided in the major surface 20a opposite from the stator 1, but may be provided in the other major surface 20b opposed to the stator 1. Further, where the printed board 20 is a multilayer printed board, the conductor targets T may be provided in an inner wiring layer other than the major surfaces 20a, 20b. The conductor targets T are preferably provided in the same wiring layer (including the major surfaces) of the printed board 20. The conductor targets T are preferably provided in an wiring layer located closest possible to the stator 1 (e.g., in the major surface 20b) for reduction of distances to chip inductors L1, L2, L3, L4 to be described later.

In FIGS. 1 and 2, the conductor targets T are hatched for clarity. This also applies to other drawings to be described later.

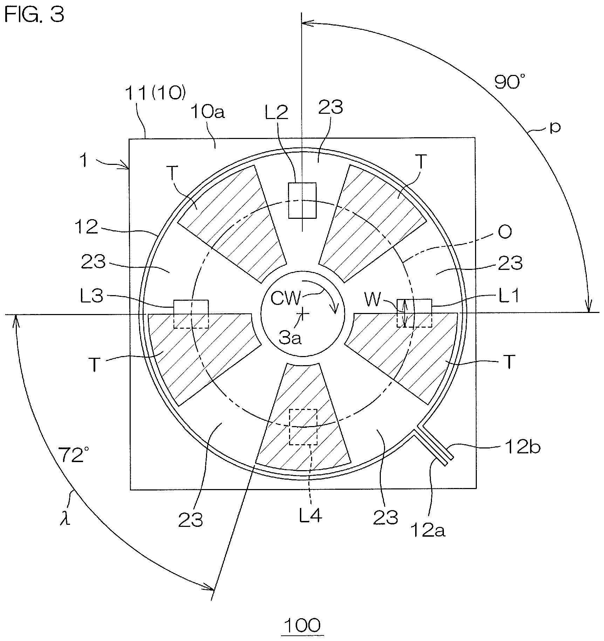

FIG. 3 is a plan view as seen through the insulative board 21 along the rotation axis 3a, showing the relative layout of the conductor targets T and the chip inductors L1, L2, L3, L4 (hereinafter referred to generally as "chip inductors L") provided on the stator 1.

The conductor targets T are held on one of opposite major surfaces of the insulative board 21 so as to be cyclically arranged circumferentially about the rotation axis 3a. Thus, the conductor patterns of the conductor targets T have cyclicity (geometrical periodicity) circumferentially about the rotation axis 3a. The conductor targets T are each constituted by a one-cycle conductor pattern. The conductor targets T are moved to pass through a rotation track O (circular track) defined about the rotation axis 3a, as the rotation shaft 3 is rotated to thereby rotate the rotor 2.

In this example embodiment, the conductor targets T are equidistantly arranged at a certain cycle (pitch) $\lambda$ (hereinafter referred to as "conductor target pitch $\lambda$") entirely circumferentially about the rotation axis 3a. In this example embodiment, the conductor targets T are solid conductor patterns provided on the one major surface of the insulative board 21. The conductor targets T are circumferentially separated from each other and isolated from each other. That is, the individual conductor patterns (solid conductor patterns) respectively constitute the conductor targets T. The conductor targets T have the same length (width) as measured along the rotation track O. In this example embodiment, more specifically, the conductor targets T are respectively constituted by conductor patterns having the same shape and the same size, and are arranged rotationally symmetrically about the rotation axis 3a. Still more specifically, the conductor targets T are each configured in a fan shape defined about the rotation axis 3a (more precisely, a sector shape removed of a radially inner portion). In the illustrated example, a distance between each adjacent two of the conductor targets T, i.e., the length of a non-conductive portion 23, as measured along the rotation track O, is equal to the length (width) of each of the conductor targets T as measured along the rotation track O by way of example. The length (width) of each of the conductor targets T as measured along the rotation track O depends upon the design of the inductive position detector 100, and may be optimally, for example, about 70% of the conductor target pitch $\lambda$.

The chip inductors L are surface-mounted on the one major surface 10a of the printed board 10 of the stator 1. In this example embodiment, the chip inductors L are mounted on the major surface 10a opposed to the rotor 2, but may be mounted on the other major surface 10b opposite from the rotor 2. The chip inductors L are disposed in opposed relation to the rotation track O of the conductor targets T with different spatial phases with respect to the conductor targets T. Thus, the chip inductors L respectively serve as the detection coils that detect a magnetic field change occurring due to the passage of the conductor targets T. The chip inductors L are surface-mounted on the same major surface 10a of the printed board 10. Therefore, the distances between the chip inductors L and the rotor 2 (more specifically, distances between the chip inductors L and the conductor targets T) are substantially equal to each other.

The chip inductors L are typically industrially mass-produced chip inductors having the same specifications. The chip inductors L each have a coil width W that is 25% to 75% (not less than 25% and not greater than 75%) of the conductor target pitch $\lambda$ as measured along the rotation track O. The coil width W is preferably about 50% of the conductor target pitch $\lambda$. The detection can be properly achieved, if the coil width W is in a range of 25% to 75% of the conductor target pitch $\lambda$. Therefore, chip inductors each having a coil width falling within a range of 25% to 75% of the conductor target pitch $\lambda$ may be selected from standardized chip inductors supplied to the market.

Multilayer chip inductors each having a pair of connection electrodes 31, 32 (see FIG. 1) provided on the opposite ends thereof are usable as the chip inductors L. Examples of the multilayer chip inductors are described in PTL 5. The use of the multilayer chip inductors makes it possible to provide detection coils each having a smaller size and a greater turn number. Thus, even if the conductor target pitch $\lambda$ is reduced to increase the detection resolution with the provision of a greater number of conductor targets T, detection signals each having a required amplitude can be obtained from the chip inductors L.

The chip inductors L typically each have a parallelepiped shape having a longitudinal axis extending in a direction in which the connection electrodes 31, 32 are opposed to each other. Where the chip inductors L are each surface-mounted on the printed board 10 with the coil center axis thereof (the center axis of the coil thereof) defined perpendicularly to the major surface 10a of the printed board 10, the chip inductors L each have a transverse axis length that is substantially equal to the coil width W of the incorporated coil. In this example embodiment, the chip inductors L are mounted on the printed board 10 with their longitudinal axes directed radially of the rotation track O, but the longitudinal axes are not necessarily required to be directed radially of the rotation track O.

In this example embodiment, the chip inductors L are arranged equidistantly along the rotation track O entirely circumferentially about the rotation axis 3a. In this example embodiment, four chip inductors L are arranged at an angular interval of 90 degrees circumferentially about the rotation axis 3a. These chip inductors L include a first-phase chip inductor L1 (first phase group), a second-phase chip inductor L2 (second phase group), a third-phase chip inductor L3 (third phase group) and a fourth-phase chip inductor L4 (fourth phase group) which are arranged with a phase difference of one fourth the conductor target pitch $\lambda$.

In this example embodiment, five conductor targets T are arranged at a conductor target pitch $\lambda$ of 72 degrees circumferentially about the rotation axis 3a, and the conductor target pitch $\lambda$ corresponds to one electrical angle cycle, i.e., an electrical angle of 360 degrees. The four chip inductors L are arranged at a cycle (pitch) p (hereinafter referred to as "chip inductor pitch p") of 90 degrees. Therefore, a difference between the conductor target pitch $\lambda$ and the chip inductor pitch p is 18 (= 90-72) degrees. An angle of 18 (= 72/4) degrees corresponds to one fourth the conductor target pitch $\lambda$ (72

degrees).

Therefore, two of the chip inductors L located in a positional relationship with a mechanical angle difference of 90 degrees have a phase difference of 90 degrees on an electrical angle basis, i.e., a phase difference of one fourth the conductor target pitch λ. Specifically, the second-phase chip inductor L2 has a phase difference of 90 degrees with respect to the first-phase chip inductor L1. Similarly, the third-phase chip inductor L3 has a phase difference of 90 degrees with respect to the second-phase chip inductor L2, and the fourth-phase chip inductor L4 has a phase difference of 90 degrees with respect to the third-phase chip inductor L3. Therefore, the third-phase chip inductor L3 has a phase difference of 180 degrees with respect to the first-phase chip inductor L1 and, therefore, these chip inductors L1 and L3 are in reverse phase relation. Similarly, the fourth-phase chip inductor L4 has a phase difference of 180 degrees with respect to the second-phase chip inductor L2 and, therefore, these chip inductors L2 and L4 are in reverse phase relation.

The chip inductors L are surface-mounted on the printed board 10 with their coil center axes set parallel to the rotation axis 3a. When a magnetic field applied parallel to the coil center axes, i.e., parallel to the rotation axis 3a, is changed, therefore, the chip inductors L respectively generate inductive voltages according to the magnetic field change.

An excitation coil 12 is provided in the printed board 10 of the stator 1. The excitation coil 12 is configured in a loop shape such that the chip inductors L are located inward of the excitation coil 12 as seen in plan along the rotation axis 3a (see FIG. 2). That is, the excitation coil 12 has a coil center axis that is parallel to the rotation axis 3a. In this example embodiment, the conductor targets T are also located inward of the loop-shaped excitation coil 12 as seen in plan. In this example embodiment, the excitation coil 12 has a generally annular shape as seen in plan. Specifically, the excitation coil 12 is a pattern coil constituted by a spiral conductor pattern formed in the printed board 10 and configured in a loop shape (in an annular shape in this example embodiment) as a whole. The printed board 10 may be, for example, a multilayer printed board including a plurality of wiring layers stacked one on another. In this case, the excitation coil 12 may be provided by forming pattern coils in the form of spiral conductor patterns in the respective wiring layers (e.g., four wiring layers) and connecting the pattern coils together by vias for inter-layer connection.

An excitation source 5 that generates an AC voltage is connected to the lead portions 12a, 12b of the excitation coil 12. When the AC voltage is applied to the excitation coil 12 from the excitation source 5, a high-frequency magnetic field whose direction is reversed at the frequency of the AC voltage is generated in a direction parallel to the rotation axis 3a by the excitation coil 12. The high-frequency magnetic field of the excitation coil 12 interlinks with the chip inductors L, so that inductive electromotive forces are generated in the respective chip inductors L.

Though not shown, a conductor pattern (more specifically, a copper foil pattern) is provided in the printed board 10 of the stator 1 to connect the chip inductors L together to provide detection circuits.

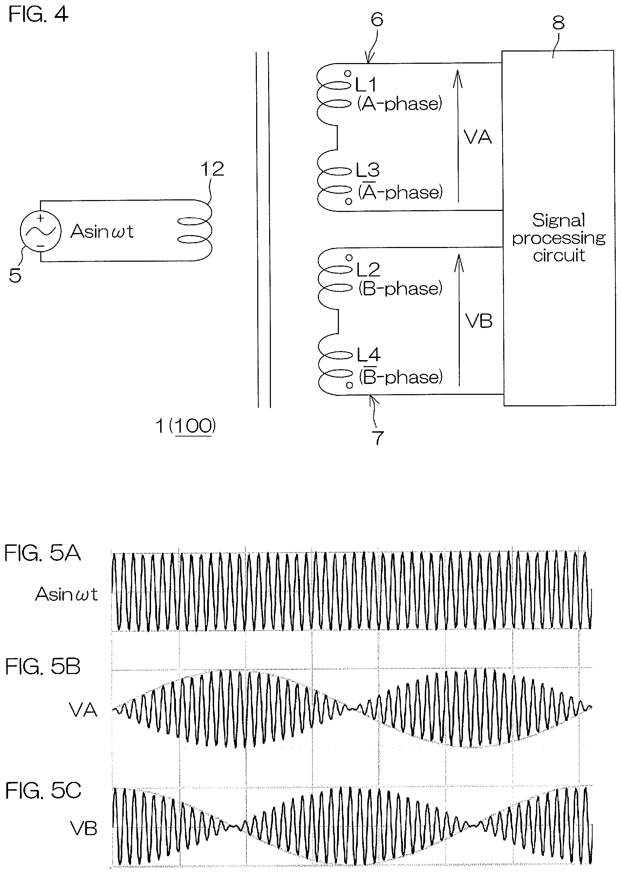

FIG. 4 shows the equivalent circuit of the stator 1. The first-phase chip inductor L1 generates an A-phase detection signal, and the third-phase chip inductor L3 generates a reversed A-phase (/A-phase) detection signal. Therefore, the same-polarity terminals of the first-phase chip inductor L1 and the third-phase chip inductor L3 are connected (differentially connected) to each other to provide an A-phase detection circuit 6 that outputs a differential signal of the first-phase chip inductor L1 and the third-phase chip inductor L3 as a detection signal VA. The second-phase chip inductor L2 generates a B-phase detection signal having a phase difference of 90 degrees with respect to the A-phase detection signal. The fourth-phase chip inductor L4 generates a reversed B-phase (/B-phase) detection signal. Therefore, the same-polarity terminals of the second-phase chip inductor L2 and the fourth-phase chip inductor L4 are connected (differentially connected) to each other to provide a B-phase detection circuit 7 that outputs a differential signal of the second-phase chip inductor L2 and the fourth-phase chip inductor L4 as a detection signal VB.

As described above, when the AC voltage ($A\sin\omega t$, wherein A is a constant indicating an amplitude, $\omega$ is an angular frequency, and t is time) is applied to the excitation coil 12 from the excitation source 5, the A-phase detection circuit 6 and the B-phase detection circuit 7 respectively generate the detection signals VA, VB according to a change in the interlinkage flux of the high-frequency magnetic field generated by the excitation coil 12 with the chip inductors L. The high-frequency magnetic field generated by the excitation coil 12 induces eddy currents in the conductor targets T. The eddy currents generate magnetic fields in a direction opposite to that of the magnetic field generated by the excitation coil 12. Therefore, when the conductor targets T are brought into opposed relation to the chip inductors L, the voltages induced in the chip inductors L are reduced. By utilizing this phenomenon, the detection signals VA, VB are properly processed by a signal processing circuit 8 to thereby provide information about the rotational position.

For each of the voltages induced in the respective chip inductors L, a constant component is defined as C, and a variable component is defined as V. It is herein assumed that the phase is positive when the conductor targets T are moved in a clockwise direction CW, and the chip inductor L1 shown in FIG. 3 is defined as a reference chip inductor. Then, voltages $V_{L1}$, $V_{L2}$, $V_{L3}$, $V_{L4}$ respectively induced in the chip inductors L1, L2, L3, L4 at a rotation angle $\theta$ are represented as follows. It is noted that K represents the amplitudes of the induced AC voltages.

$$V_{L1} = K\sin\omega t \cdot \{C + V \cdot \sin(\theta + 0)\} = K\sin\omega t \cdot (C + V \cdot \sin\theta) \quad \ldots (1)$$

$$V_{L2} = K\sin\omega t \cdot \{C + V \cdot \sin(\theta + 90)\} = K\sin\omega t \cdot (C + V \cdot \cos\theta) \quad \ldots (2)$$

$$V_{L3} = K\sin\omega t \cdot \{C + V \cdot \sin(\theta + 180)\} = K\sin\omega t \cdot (C - V \cdot \sin\theta) \quad \ldots (3)$$

$$V_{L4} = K\sin\omega t \cdot \{C + V \cdot \sin(\theta + 270)\} = K\sin\omega t \cdot (C - V \cdot \cos\theta) \quad \ldots (4)$$

Since the chip inductors L1, L3 are differentially connected to each other and the chip inductors L2, L4 are differentially connected to each other, the detection signals VA, VB are represented as follows:

$$VA = V_{L1} - V_{L3}$$

$$= K\sin\omega t \cdot (C + V \cdot \sin\theta) - K\sin\omega t \cdot (C - V \cdot \sin\theta)$$

$$= 2V \cdot K\sin\omega t \cdot \sin\theta \quad \ldots (5)$$

$$VB = V_{L2} - V_{L4}$$

$$= K\sin\omega t \cdot (C + V \cdot \cos\theta) - K\sin\omega t \cdot (C - V \cdot \cos\theta)$$

$$= 2V \cdot K\sin\omega t \cdot \cos\theta \quad \ldots (6)$$

FIG. 5A shows an exemplary waveform of the AC voltage generated by the excitation source 5, and FIGS. 5B and 5C show exemplary waveforms of the detection signals VA, VB. As shown, the detection signals VA, VB respectively outputted by the detection circuits 6, 7 are signals with their high-frequency signal components amplitude-modulated based on the changes in the inductive voltages occurring due to the rotation of the rotor 2. Since the chip inductors L1, L3 of the A-phase detection circuit 6 and the chip inductors L2, L4 of the B-phase detection circuit 7 are arranged at an interval of 90 degrees on the stator 1, the detection signals VA, VB are signals with a phase difference of 90 degrees. Therefore, the rotation angle θ of the rotor 2 can be determined by demodulating the detection signals VA, VB in the signal processing circuit 8 and performing an arctangent calculation.

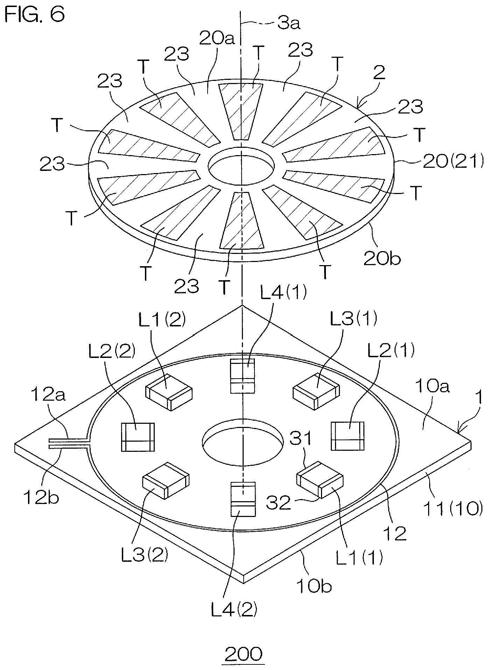

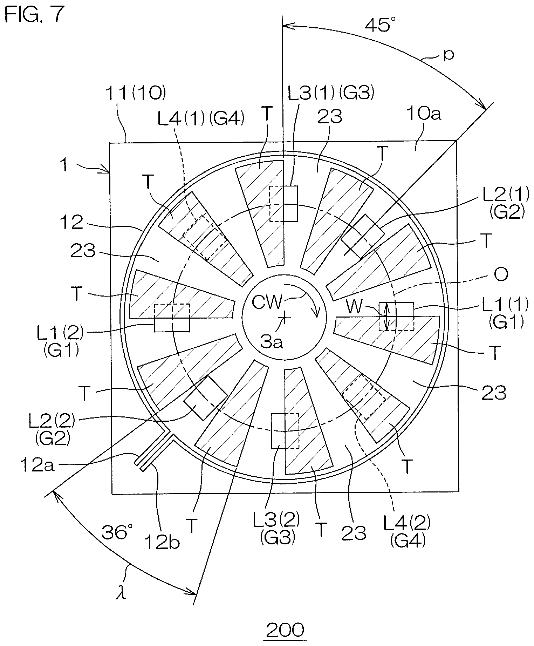

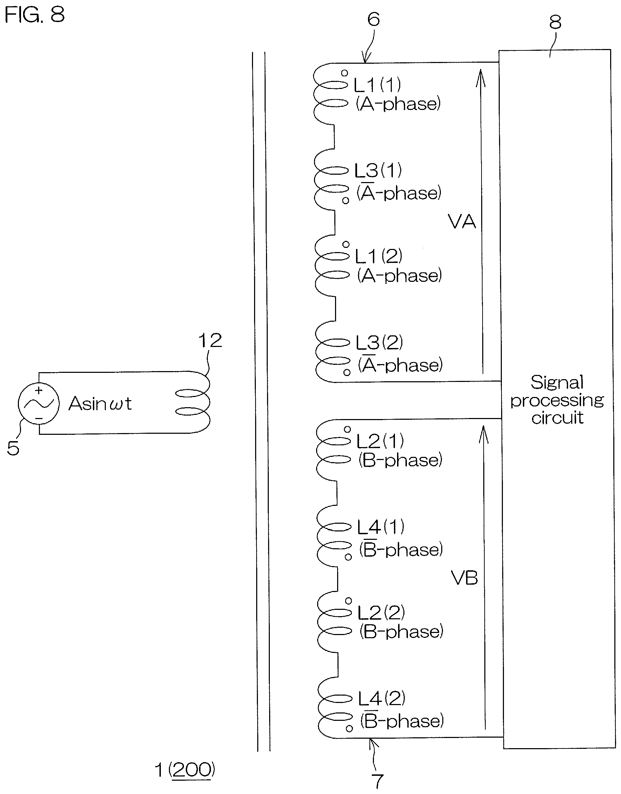

FIG. 6 is an exploded perspective view of an inductive position detector 200 according to a second example embodiment of the present invention. FIG. 7 is a plan view of the inductive position detector 200 as seen along a rotation axis 3a, showing a layout relationship between conductor targets T and chip inductors L as seen through the insulative board 21 of a rotor 2. FIG. 8 is an equivalent circuit diagram showing the electrical configuration of a stator 1. In FIGS. 6 to 8, components corresponding to those shown in FIGS. 1 to 4 will be denoted by the same reference characters as in FIGS. 1 to 4.

In this example embodiment, the number of the conductor targets T and the number of the chip inductors L are doubled as compared with those in the first example embodiment. In other words, the conductor target pitch λ and the chip inductor pitch p are 36 degrees and 45 degrees, respectively, which are half those in the first example embodiment. A study on the spatial phases of the chip inductors L with respect to the conductor targets T indicates that each two of the chip inductors L spaced an angular distance of 180 degrees from each other about the rotation axis 3a have the same phase. That is, the chip inductors L can be classified into a first phase group G1 (A-phase) including a pair of first-phase chip inductors L1(1), L1(2) opposed to each other with the rotation axis 3a interposed therebetween, a second phase group G2 (B-phase) including a pair of second-phase chip inductors L2(1), L2(2) opposed to each other with the rotation axis 3a interposed therebetween, a third phase group G3 (/A-phase) including a pair of third-phase chip inductors L3(1), L3(2) opposed to each other with the rotation axis 3a interposed therebetween, and a fourth phase group G4 (/B-phase) including a pair of fourth-phase chip inductors L4(1), L4(2) opposed to each other with the rotation axis 3a interposed therebetween. The spatial phases of the first-phase chip inductors L1(1), L1(2), the second-phase chip inductors L2(1), L2(2), the third-phase chip inductors L3(1), L3(2) and the fourth-phase chip inductors L4(1), L4(2) are offset from each other by one fourth the conductor target pitch λ about the rotation axis 3a.

The pair of first-phase chip inductors L1(1), L1(2) are differentially connected in series to the pair of third-phase chip inductors L3(1), L3(2) to provide an A-phase detection circuit 6, and the pair of second-phase chip inductors L2(1), L2(2) are differentially connected in series to the pair of fourth-phase chip inductors L4(1), L4(2) to provide a B-phase detection circuit 7. The A-phase detection circuit 6 and the B-phase detection circuit 7 respectively output detection signals VA, VB that are amplitude-modulated with their phases offset from each other by 90 degrees as in the first example embodiment. However, the rotational position can be detected with a resolution twice that in the first example embodiment, because the conductor target pitch $\lambda$ corresponding to an electrical angle of 360 degrees corresponds to a mechanical angle of 36 (= 360/10) degrees.

Though not shown, a conductor pattern (more specifically, a copper foil pattern) is provided in the printed board 10 of the stator 1 to connect the chip inductors L together to provide the detection circuits 6, 7.

For each of the voltages induced in the respective chip inductors L, a constant component is defined as C, and a variable component is defined as V. It is herein assumed that the phase is positive when the conductor targets T are moved in a clockwise direction CW, and the chip inductor L1(1) is defined as a reference chip inductor. Then, voltages $V_{L1(1)}$, $V_{L2(1)}$, $V_{L3(1)}$, $V_{L4(1)}$, $V_{L1(2)}$, $V_{L2(2)}$, $VL_{3(2)}$ and $V_{L4(2)}$ respectively induced in the chip inductors L1(1), L2(1), L3(1), L4(1), L1(2), L2(2), L3(2) and L4(2) at a rotation angle $\theta$ are represented as follows. It is noted that K represents the amplitudes of the induced AC voltages.

$$V_{L1(1)} = K\sin\omega t \cdot \{C+V\cdot\sin(\theta+0)\} = K\sin\omega t \cdot (C+V\cdot\sin\theta) \quad ...(7)$$

$$V_{L2(1)} = K\sin\omega t \cdot \{C+V\cdot\sin(\theta+90)\} = K\sin\omega t \cdot (C+V\cdot\cos\theta) \quad ...(8)$$

$$V_{L3(1)} = K\sin\omega t \cdot \{C+V\cdot\sin(\theta+180)\} = K\sin\omega t \cdot (C-V\cdot\sin\theta) \quad ...(9)$$

$$V_{L4(1)} = K\sin\omega t \cdot \{C+V\cdot\sin(\theta+270)\} = K\sin\omega t \cdot (C-V\cdot\cos\theta) \quad ...(10)$$

$$V_{L1(2)} = K\sin\omega t \cdot \{C+V\cdot\sin(\theta+0)\} = K\sin\omega t \cdot (C+V\cdot\sin\theta) \quad ...(11)$$

$$V_{L2(2)} = K\sin\omega t \cdot \{C+V\cdot\sin(\theta+90)\} = K\sin\omega t \cdot (C+V\cdot\cos\theta) \quad ...(12)$$

$$V_{L3(2)} = K\sin\omega t \cdot \{C+V\cdot\sin(\theta+180)\} = K\sin\omega t \cdot (C-V\cdot\sin\theta) \quad ...(13)$$

$$V_{L4(2)} = K\sin\omega t \cdot \{C+V\cdot\sin(\theta+270)\} = K\sin\omega t \cdot (C-V\cdot\cos\theta) \quad ...(14)$$

Since the chip inductors L1(1), L1(2) are differentially connected in series to the chip inductors L3(1), L3(2), and the chip inductors L2(1), L2(2) are differentially connected in series to the chip inductors L4(1), L4(2), the detection signals VA, VB are represented as follows:

$$VA = V_{L1(1)}+V_{L1(2)}-V_{L3(1)}-V_{L3(2)}$$

$$= 2K\sin\omega t \cdot (C+V\cdot\sin\theta)-2K\sin\omega t \cdot (C-V\cdot\sin\theta)$$

$$= 4V\cdot K\sin\omega t \cdot \sin\theta \quad ...(15)$$

$$VB = V_{L2(1)}+V_{L2(2)}-V_{L4(1)}-V_{L4(2)}$$

$$= 2K\sin\omega t \cdot (C+V\cdot\cos\theta)-2K\sin\omega t \cdot (C-V\cdot\cos\theta)$$

$$= 4V\cdot K\sin\omega t \cdot \cos\theta \quad ...(16)$$

In the second example embodiment, the number of the chip inductors L is thus increased, so that the changes in the detection signals VA, VB to be detected can be correspondingly increased. This improves the signal-to-noise ratio (S/N ratio). Further, each two of the chip inductors L spaced an angular distance of 180 degrees on a mechanical angle basis from each other and opposed to each other detect signals of the same phase. Thus, influences on the detection signals due to the misalignment of the stator 1 with respect to the rotation shaft 3, the tilt of the rotor 2 with respect to the stator plane and other errors can be minimized, thereby improving the detection accuracy.

Where Y conductor targets T (wherein Y is a natural number) are provided in the rotor 2 and 4N chip inductors L (wherein N is a natural number) are arranged equidistantly on the stator 1, consideration is given to conditions for the layout of the chip inductors L to constitute the two detection circuits 6, 7 that respectively generate the detection signals VA, VB with a phase difference of 90 degrees on an electrical angle basis.

Where the conductor target pitch λ and the chip inductor pitch p have a phase difference of λ/4 (one fourth the conductor target pitch λ), a relational expression is represented by the following expression (17), in which M is a natural number.

$$p = \lambda(M \pm 1/4) \ \ ...(17)$$

The conductor target pitch λ and the chip inductor pitch p are represented by the following expressions (18) and (19), respectively, with the use of the circumferential length Cl of the rotation track O through which the conductor targets T pass.

$$\lambda = Cl/Y \ ...(18)$$

$$p = Cl/4N \ ...(19)$$

The expressions (18) and (19) are put in the expression (7), and the resulting expression is transformed into the following expression (20). Therefore, a combination of the natural numbers Y, N, M satisfying the relationship represented by the expression (20) makes it possible to detect the detection signals with a phase difference of 90 degrees on an electrical angle basis by the detection circuits 6, 7.

$$Y = 4NM \pm N \ ...(20)$$

The first example embodiment corresponds to a combination of N = 1, M = 1, Y = 5. The second example embodiment corresponds to a combination of N = 2, M = 1, Y = 10.

In the first example embodiment and the second example embodiment, the two detection circuits 6, 7 that respectively generate the two types of detection signals VA, VB with a phase difference of 90 degrees can be thus constituted by the plurality of chip inductors L. Based on these detection signals VA, VB, the rotational position of the rotor 2, i.e., the rotational position (rotation angle) of the rotation shaft 3, can be detected.

The chip inductors L are electrical components that are smaller in size and yet can be increased in turn number and can be procured at lower costs in the market. Where an attempt is made to increase the detection resolution by increasing the number of the conductor targets T to increase the number of poles, therefore, a layout for a shorter conductor target pitch λ is possible without excessively reducing the amplitudes of the detection signals without the need for excessively great costs. The chip inductors L are mounted on the one major surface 10a of the printed board 10 of the stator 1, i.e., on the same major surface, whereby the distances from the chip inductors L to the conductor targets T can be made uniform. In addition, industrially mass-produced chip inductors L are highly uniform in performance. Therefore, uniform detection signals can be obtained from the chip inductors L, obviating the need for complicated signal processing.

In the first and second example embodiments, the chip inductors L are surface-mounted on the major surface 10a opposed to the printed board 10 of the rotor 2, so that the insulative board 11 of the printed board 10 of the stator 1 is not interposed between the chip inductors L and the conductor targets T. Thus, the chip inductors L and the conductor targets T are arranged with smaller distances therebetween. Therefore, signals each having an amplitude that is significantly changed by the passage of the conductor targets T can be outputted from the respective chip inductors L.

Unlike in the arrangement including the plurality of detection coils formed on the silicon substrate by the semiconductor production process, the chip inductors L (which are separate elements) can be disposed at any desired positions in opposed relation to the rotation track O, allowing for highly flexible layout. Therefore, the chip inductors L can be laid out entirely circumferentially of the rotation track O as in the first and second example embodiments. The entirely circumferential layout makes it easier to cope with the axis misalignment of the rotation shaft 3 connected to the rotor 2. Specifically, where the rotation shaft 3 is the non-output shaft end portion of the motor shaft of an electric motor, the rotation shaft 3 is liable to be misaligned due to a radial load exerted on the motor shaft. Even in this case, the offset of the detection position can be avoided by simple signal processing.

Particularly, where the multilayer chip inductors are used as the chip inductors L, the chip inductors L can be each configured to have a smaller size and a greater turn number. Even if the inductive position detector is designed so that the conductor target pitch λ is reduced to increase the resolution, therefore, the chip inductors L can be arranged entirely circumferentially of the rotation track O.

In the first and second example embodiments, the conductor targets T are arranged at the predetermined conductor target pitch λ along the rotation track O. The chip inductors L each have a coil width W that is 25% to 75% (not less than 25% and not greater than 75%) of the conductor target pitch $\lambda$ as measured along the rotation track O.

In the first example embodiment, more specifically, the coil width W of each of the chip inductors L is about 25% of the conductor target pitch $\lambda$. In the second example embodiment, the coil width W of each of the chip inductors L is about 50% of the conductor target pitch $\lambda$. If the number of the conductor targets T on the rotor 2 is greater than in the second example embodiment, the ratio of the coil width W of each of the chip inductors L to the conductor target pitch $\lambda$ is increased. If the ratio is up to about 75%, it is possible to provide a signal of a waveform that ensures accurate detection of the rotational position. Even if the detection resolution is increased by increasing the number of the conductor targets T with the use of the industrially-produced small-size chip inductors L and the conductor target pitch $\lambda$ is correspondingly reduced, the position detector for the detection of the rotational position can be configured in a smaller size by employing the chip inductors L each having a coil width W that is 25% to 75% of the conductor target pitch $\lambda$.

The detection can be properly achieved if the coil width W of each of the chip inductors L is in a range of 25% to 75% of the conductor target pitch $\lambda$. Therefore, the chip inductors L can be easily selected from standardized chip inductors supplied to the market.

In the first and second example embodiments, the chip inductors L provided on the stator 1 include the at least one first-phase chip inductor L1, the at least one second-phase chip inductor L2, the at least one third-phase chip inductor L3 and the at least one fourth-phase chip inductor L4, which are arranged with a phase difference of one fourth the conductor target pitch $\lambda$ and respectively constitute the first phase group, the second phase group, the third phase group and the fourth phase group. The first-phase chip inductor L1 (the chip inductor of the first phase group), the second-phase chip inductor L2 (the chip inductor of the second phase group), the third-phase chip inductor L3 (the chip inductor of the third phase group) and the fourth-phase chip inductor L4 (the chip inductor of the fourth phase group) are different from each other in spatial phase by 90 degrees with respect to the conductor targets T. The detection signals can be obtained from these chip inductors to accurately detect the rotational position of the rotor 2.

Particularly, in the first and second example embodiments, the first-phase chip inductor L1 and the third-phase chip inductor L3 having a spatial phase difference of 180 degrees are differentially connected to each other to provide the detection circuit 6. Similarly, the second-phase chip inductor L2 and the fourth-phase chip inductor L4 having a spatial phase difference of 180 degrees are differentially connected to each other to provide the detection circuit 7. Thus, the detection signals VA, VB of greater amplitudes with a phase difference of 90 degrees are obtained from the two detection circuits 6, 7. In addition, noise components appearing in common in the chip inductors L due to external disturbance can be removed by the differential connection, so that the detection signals VA, VB accurately indicate the positions of the conductor targets T. Examples of the external disturbance include an external magnetic field and variations (manufacturing variations) in distance between the stator 1 and the rotor 2.

In the second example embodiment, the first-phase chip inductor L1, the second-phase chip inductor L2, the third-phase chip inductor L3 and the fourth-phase chip inductor L4 each include a plurality of chip inductors, and the same phase chip inductors L are connected in series. This makes it possible to provide detection signals VA, VB of greater amplitudes, thereby improving the S/N ratio.

As described above, the Y conductor targets T and the 4N chip inductors L satisfying the expression (20) are equidistantly arranged entirely circumferentially about the rotation axis 3a, whereby the 4N chip inductors L can be classified into the four phase groups which are different from each other in spatial phase by 90 degrees with respect to the conductor targets T (these phase groups each include N chip inductors L). That is, the chip inductors L are classified into the first phase group G1 including the N first-phase chip inductors L1, the second phase group G2 including the N second-phase chip inductors L2, the third phase group G3 including the N third-phase chip inductors L3, and the fourth phase group G4 including the N fourth-phase chip inductors L4. The chip inductors L1, L3 of the first phase group G1 and the third phase group G3 are differentially connected together, and the chip inductors L2, L4 of the second phase group G2 and the fourth phase group G4 are differentially connected together. Thus, the detection circuits 6, 7 can be provided which respectively output the detection signals VA, VB which are different from each other in phase by 90 degrees.

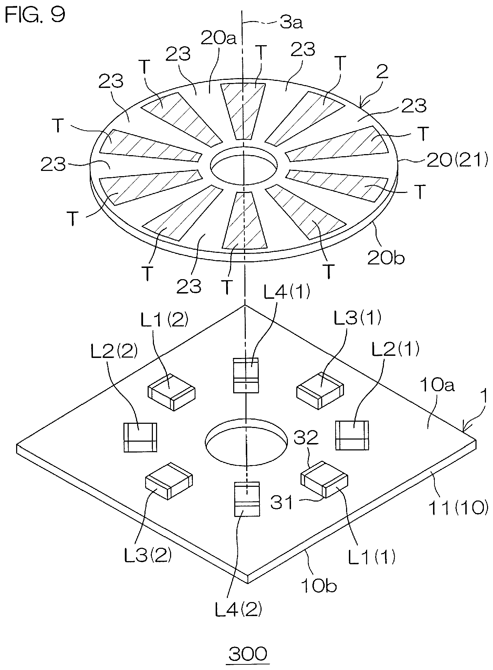

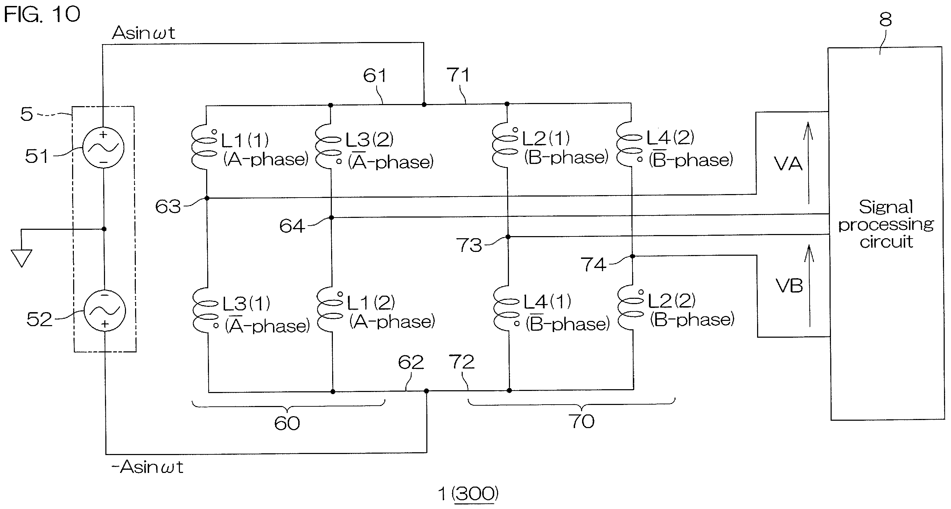

FIG. 9 is an exploded perspective view showing the configuration of an inductive position detector 300 according to a third example embodiment of the present invention. FIG. 10 is an electrical circuit diagram showing the equivalent circuit of a stator 1. In FIGS. 9 and 10, components corresponding to those in the second example embodiment will be denoted by the same reference characters as in the second example embodiment.

This example embodiment is different from the second example embodiment in that the stator 1 includes no excitation coil.

Chip inductors L are bridge-connected to each other to provide an AC bridge circuit. More specifically, an A-phase AC bridge circuit 60 and a B-phase AC bridge circuit 70 are provided. That is, though not shown, a conductor pattern (more specifically, a copper foil pattern) is provided in the printed board 10 of the stator 1 to connect the chip inductors L together to provide the A-phase AC bridge circuit 60 and the B-phase AC bridge circuit 70.

The A-phase AC bridge circuit 60 is provided by bridge-connecting first-phase chip inductors L1(1), L1(2) and third-phase chip inductors L3(1), L3(2) having a phase difference of 180 degrees with respect to the first-phase chip inductors L1(1), L1(2). The first-phase chip inductors L1(1), L1(2) are respectively disposed on one pair of opposite sides of the A-phase AC bridge circuit 60, and the third-phase chip inductors L3(1), L3(2) are respectively disposed on the other pair of opposite sides of the A-phase AC bridge circuit 60. A connection point between the first-phase chip inductor L1(1) and the third-phase chip inductor L3(2) serves as a first A-phase AC voltage application terminal 61, and a connection point between the third-phase chip inductor L3(1) and the first-phase chip inductor L1(2) serves as a second A-phase AC voltage application terminal 62. A middle point between the first-phase chip inductor L1(1) and the third-phase chip inductor L3(1) serves as a first A-phase signal detection terminal 63, and a middle point between the third-phase chip inductor L3(2) and the first-phase chip inductor L1(2) serves as a second A-phase signal detection terminal 64.

The B-phase AC bridge circuit 70 is provided by bridge-connecting second-phase chip inductors L2(1), L2(2) and fourth-phase chip inductors L4(1), L4(2) having a phase difference of 180 degrees with respect to the second-phase chip inductors L2(1), L2(2). The second-phase chip inductors L2(1), L2(2) are respectively disposed on one pair of opposite sides of the B-phase AC bridge circuit 70, and the fourth-phase chip inductors L4(1), L4(2) are respectively disposed on the other pair of opposite sides of the B-phase AC bridge circuit 70. A connection point between the second-phase chip inductor L2(1) and the fourth-phase chip inductor L4(2) serves as a first B-phase AC voltage application terminal 71, and a connection point between the fourth-phase chip inductor L4 (1) and the second-phase chip inductor L2(2) serves as a second B-phase AC voltage application terminal 72. A middle point between the second-phase chip inductor L2(1) and the fourth-phase chip inductor L4(1) serves as a first B-phase signal detection terminal 73, and a middle point between the fourth-phase chip inductor L4(2) and the second-phase chip inductor L2(2) serves as a second B-phase signal detection terminal 74.

AC voltages are applied to the A-phase AC bridge circuit 60 and the B-phase AC bridge circuit 70 from an excitation source 5. The excitation source 5 includes a first excitation source 51 that generates a first AC voltage ($A\sin\omega t$), and a second excitation source 52 that generates a second AC voltage ($-A\sin\omega t$) which is in reverse phase relation to the first AC voltage. The first A-phase AC voltage application terminal 61 is connected to the first excitation source 51, and the first AC voltage ($A\sin\omega t$) is applied to the first A-phase AC voltage application terminal 61. The second A-phase AC voltage application terminal 62 is connected to the second excitation source 52, and the second AC voltage ($-A\sin\omega t$) is applied to the second A-phase AC voltage application terminal 62. The first B-phase AC voltage application terminal 71 is connected to the first excitation source 51, and the first AC voltage ($A\sin\omega t$) is applied to the first B-phase AC voltage application terminal 71. The second B-phase AC voltage application terminal 72 is connected to the second excitation source 52, and the second AC voltage ($-A\sin\omega t$) is applied to the second B-phase AC voltage application terminal 72. A voltage appearing between the first A-phase signal detection terminal 63 and the second A-phase signal detection terminal 64 is detected as the detection signal VA. Further, a voltage appearing between the first B-phase signal detection terminal 73 and the second B-phase signal detection terminal 74 is detected as the detection signal VB.

In this example embodiment, the AC voltages are respectively applied to the A-phase AC bridge circuit 60 and the B-phase AC bridge circuit 70 from the common excitation source 5, but the AC voltages may be respectively applied to the A-phase AC bridge circuit 60 and the B-phase AC bridge circuit 70 from separate excitation sources 5.

When the conductor targets T are brought into opposed relation to the chip inductors L, the magnetic fluxes of the chip inductors L are blocked by the conductor targets T, and the inductances of the chip inductors L are reduced. This example embodiment utilizes the reduction in the inductances of the chip inductors L to detect the rotation angle based on the inductance changes of the chip inductors L occurring due to the rotation of the rotor 2 without the use of the excitation coil.

The inductance changes of the chip inductors L1(1), L2(1), L3(1), L4(1), L1(2), L2(2), L3(2), L4(2) can be represented as follows, wherein a constant component is defined as LC and a variable component is defined as LV.

$$L1(1):\ LC+LV\cdot\sin(\theta+0)\ =\ LC+LV\cdot\sin\theta\ \ldots(21)$$

$$L2(1):\ LC+LV\cdot\sin(\theta+90)\ =\ LC+LV\cdot\cos\theta\ \ldots(22)$$

$$L3(1):\ LC+LV\cdot\sin(\theta+180)\ =\ LC-LV\cdot\sin\theta\ \ldots(23)$$

$$L4(1):\ LC+LV\cdot\sin(\theta+270)\ =\ LC-LV\cdot\cos\theta\ \ldots(24)$$

$$L1(2):\ LC+LV\cdot\sin(\theta+0)\ =\ LC+LV\cdot\sin\theta\ \ldots(25)$$

$$L2(2):\ LC+LV\cdot\sin(\theta+90)\ =\ LC+LV\cdot\cos\theta\ \ldots(26)$$

$$L3(2): \text{ LC+LV·sin}(\theta+180) = \text{LC-LV·sin}\theta \ ...(27)$$

$$L4(2): \text{ LC+LV·sin}(\theta+270) = \text{LC-LV·cos}\theta \ ...(28)$$

Therefore, signals outputted from the A-phase AC bridge circuit 60 and the B-phase AC bridge circuit 70, i.e., the detection signals VA, VB, are respectively represented by the following expressions (29) and (30), wherein k is a constant indicating an amplitude.

$$VA = \{L1(2)/(L1(2)+L3(2))-L3(1)/(L1(1)+L3(1))\}·(2k\sin\omega t-k\sin\omega t)$$

$$= \text{LV/LC·ksin}\omega t·\sin\theta \ ...(29)$$

$$VB = \{L2(2)/(L2(2)+L4(2))-L4(1)/(L2(1)+L4(1))\}·(2k\sin\omega t-k\sin\omega t)$$

$$= \text{LV/LC·ksin}\omega t·\cos\theta \ ...(30)$$

The AC bridge circuits 60, 70 are adapted to detect the impedance changes of the chip inductors L occurring due to a change in the positional relationship between the chip inductors L and the conductor targets T. The impedances of the chip inductors L each include an inductance component and a minute DC resistance component, but the inductance component is dominant. Therefore, the DC resistance component is substantially negligible. Thus, the inductance changes of the chip inductors L occurring due to the change in the positional relationship between the chip inductors L and the conductor targets T can be detected by the AC bridge circuits 60, 70.

The detection signals VA, VB respectively represented by the expressions (29) and (30) are signals which are changed according to the rotational positions of the conductor targets T, and have phases offset from each other by 90 degrees. As apparent from a comparison between the expressions (29), (30) and the expressions (5), (6) described above, the detection signals VA, VB respectively have waveforms similar to those shown in FIGS. 5B and 5C according to the rotational positions of the conductor targets T. Thus, the rotational position of the rotor 2 can be detected as in the first and second example embodiments. Therefore, the position detector is capable of detecting the position of the rotor 2 even without the provision of the excitation coil.

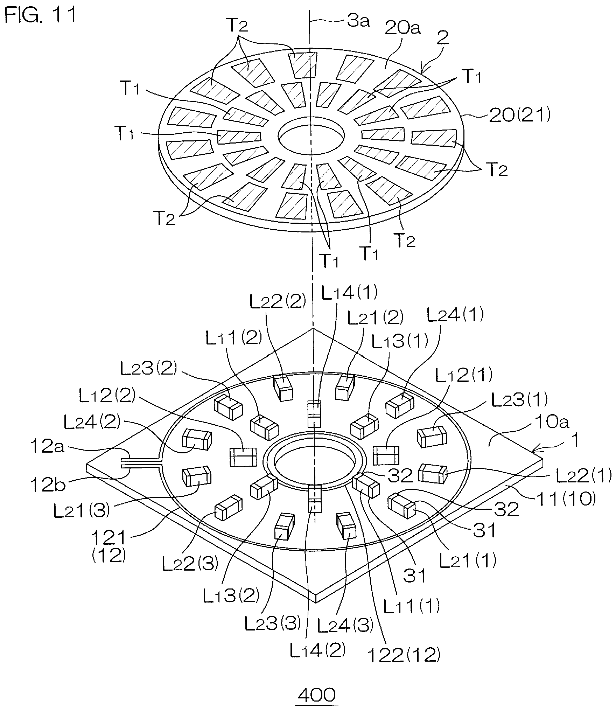

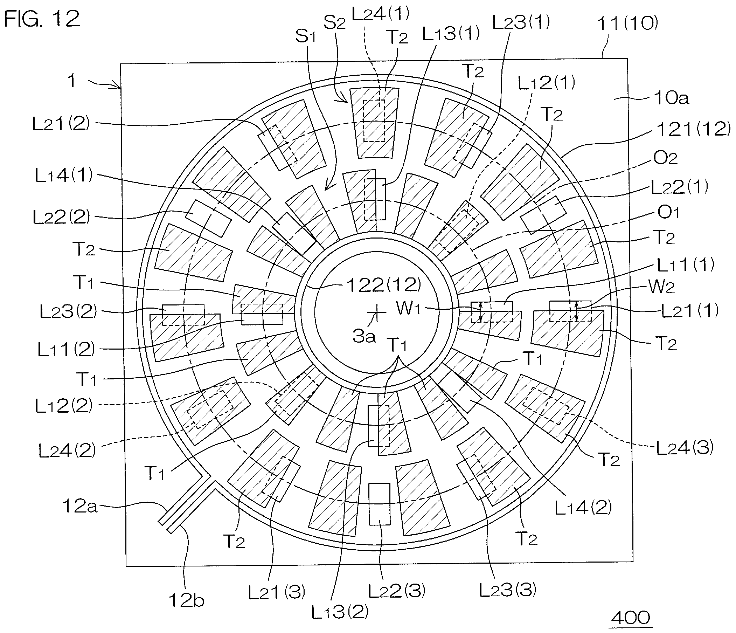

FIG. 11 is an exploded perspective view that describes the configuration of an inductive position detector 400 according to a fourth example embodiment of the present invention. FIG. 12 is a plan view of the inductive position detector 400 as seen along a rotation axis 3a, showing a positional relationship between conductor targets T and chip inductors L as seen through the insulative board 21 of a rotor 2. In FIGS. 11 and 12, components corresponding to those in the first and second example embodiments will be denoted by the same reference characters as in the first and second example embodiments.

The position detector 400 includes a plurality of rotation tracks $O_1$, $O_2$ defined about the rotation axis 3a (see FIG. 12), and has a multitrack configuration adapted to detect the rotational position on the rotation tracks $O_1$, $O_2$. Specifically, the position detector 400 of this example embodiment has a two-track configuration having a first rotation track $O_1$ and a second rotation track $O_2$ which are circular and coaxial about the rotation axis 3a. The first rotation track $O_1$ is disposed inward of the second rotation track $O_2$, and defined by a circle having a smaller diameter than the second rotation track $O_2$. In one major surface 20a (in this example embodiment, a major surface opposite from a stator 1) of the printed board 20 of the rotor 2, a plurality of conductor targets $T_1$ are equidistantly arranged entirely circumferentially along the first rotation track $O_1$, and a plurality of conductor targets $T_2$ are equidistantly arranged entirely circumferentially along the second rotation track $O_2$. On one major surface 10a (in this example embodiment, a major surface opposed to the rotor 2) of the printed board 10 of the stator 1, a plurality of chip inductors $L_1$ are equidistantly arranged entirely circumferentially along the first rotation track $O_1$, and a plurality of chip inductors $L_2$ are equidistantly arranged entirely circumferentially along the second rotation track $O_2$.

The chip inductors $L_1$ arranged along the first rotation track $O_1$ can be classified, based on the spatial phases of the chip inductors $L_1$ with respect to the conductor targets $T_1$ about the rotation axis 3a, into a first phase group (A-phase) including first-phase chip inductors $L_11(1)$, $L_11(2)$, a second phase group (B-phase) including second-phase chip inductors $L_12(1)$, $L_12(2)$, a third phase group (/A-phase) including third-phase chip inductors $L_13(1)$, $L_13(2)$, and a fourth phase group (/B-phase) including fourth-phase chip inductors $L_14(1)$, $L_14(2)$. The first-phase chip inductors $L_11(1)$, $L_11(2)$, the second-phase chip inductors $L_12(1)$, $L_12(2)$, the third-phase chip inductors $L_13(1)$, $L_13(2)$ and the fourth-phase chip inductors $L_14(1)$, $L_14(2)$ have spatial phases offset from each other by one fourth a conductor target pitch $\lambda$ about the rotation axis 3a.

Similarly, the chip inductors $L_2$ arranged along the second rotation track $O_2$ can be classified, based on the spatial phases of the chip inductors $L_2$ with respect to the conductor targets $T_2$ about the rotation axis 3a, into a first phase group (A-phase) including first-phase chip inductors $L_21(1)$, $L_21(2)$, $L_21(3)$, a second phase group (B-phase) including second-phase chip inductors $L_22(1)$, $L_22(2)$, $L_22(3)$, a third phase group (/A-phase) including third-phase chip inductors $L_23(1)$, $L_23(2)$, $L_23(3)$, and a fourth phase group (/B-phase) including fourth-phase chip inductors $L_24(1)$, $L_24(2)$, $L_24(3)$. The first-phase chip inductors $L_21(1)$, $L_21(2)$, $L_21(3)$, the second-phase chip inductors $L_22(1)$, $L_22(2)$, $L_22(3)$, the third-phase chip inductors $L_23(1)$, $L_23(2)$, $L_23(3)$ and the fourth-phase chip inductors $L_24(1)$, $L_24(2)$, $L_24(3)$ have spatial phases offset from each other by one fourth a conductor target pitch $\lambda$ about the rotation axis 3a.

The conductor targets $T_1$ and the chip inductors $L_1$ arranged along the first rotation track $O_1$ constitute a first set $S_1$, and the conductor targets $T_1$ are opposed to the chip inductors $L_1$. Similarly, the conductor targets $T_2$ and the chip inductors $L_2$ arranged along the second rotation track $O_2$ constitute a second set $S_2$, and the conductor targets $T_2$ are opposed to the chip inductors $L_2$. The first set $S_1$ and the second set $S_2$ share the rotor 2 and the stator 1.

The number $Y_1$ of the conductor targets $T_1$ of the first set $S_1$ is different from the number $Y_2$ of the conductor targets $T_2$ of the second set $S_2$. The number $Y_1$ of the conductor targets $T_1$ of the first set $S_1$ and the number $4N_1$ of the chip inductors $L_1$ of the first set $S_1$ satisfy the aforementioned expression (20) and, therefore, satisfy the following expression (31). At the same time, the number $Y_2$ of the conductor targets $T_2$ of the second set $S_2$ and the number $4N_2$ of the chip inductors $L_2$ of the second set $S_2$ satisfy the aforementioned expression (20) and, therefore, satisfy the following expression (32).

$$Y_1 = 4N_1M_1 \pm N_1 \text{ (wherein } Y_1, N_1, M_1 \text{ are natural numbers) } ...(31)$$

$$Y_2 = 4N_2M_2 \pm N_2 \text{ (wherein } Y_2, N_2, M_2 \text{ are natural numbers) } ...(32)$$

$Y_1 = 4N_1M_1 \pm N_1$ (wherein $Y_1$, $N_1$, $M_1$ are natural numbers) ... (31) $Y_2 = 4N_2M_2 \pm N_2$ (wherein $Y_2$, $N_2$, $M_2$ are natural numbers) ... (32)

The example shown in FIGS. 11 and 12 corresponds to a case in which $Y_1 = 14$, $N_1 = 2$, $M_1 = 2$, $Y_2 = 15$, $N_2 = 3$ and $M_2 = 1$.

Since the number $Y_1$ of the conductor targets $T_1$ of the first set $S_1$ is different from the number $Y_2$ of the conductor targets $T_2$ of the second set $S_2$, rotational positions in a wider rotation angle range can be discretely detected. Particularly, where the number $Y_1$ of the conductor targets $T_1$ of the first set $S_1$ and the number $Y_2$ of the conductor targets $T_2$ of the second set $S_2$ are coprime, one-turn absolute detection can be achieved, in which rotational positions in a one-turn range (a 360-degree range) can be discretely detected.

In this example, the chip inductors $L_1$ of the first set $S_1$ and the chip inductors $L_2$ of the second set $S_2$ are all chip inductors of the same specifications, and have the same shape and the same size as seen in plan along the rotation axis 3a.

In the illustrated example, the chip inductors L are arranged with their longitudinal axes each extending in a rotation radius direction about the rotation axis 3a. Typically, the longitudinal axes of the chip inductors L each extend in a direction in which the connection electrodes 31, 32 of the chip inductors L are opposed to each other. In the illustrated example, the ratio of the coil width $W_1$ of each of the chip inductors $L_1$ to the pitch of the conductor targets $T_1$ of the first set $S_1$ (conductor target pitch $\lambda_1$) is set to about 25%. On the other hand, the ratio of the coil width $W_2$ of each of the chip inductors $L_2$ to the pitch of the conductor targets $T_2$ of the second set $S_2$ (conductor target pitch $\lambda_2$) is set to 50%. Of course, these are exemplary settings, and it may be possible to design the conductor targets $T_1$, $T_2$, to select the chip inductors $L_1$, $L_2$ and to decide the layout of the conductor targets $T_1$, $T_2$ and the chip inductors $L_1$, $L_2$ so that the ratios of the coil widths $W_1$, $W_2$ to the conductor target pitches $\lambda_1$ $\lambda_2$ of the first set $S_1$ and the second set $S_2$ are set to 25% to 75%.

It is not always necessary to use the chip inductors of the same specifications for the first set $S_1$ and the second set $S_2$, but the chip inductors $L_1$ of the first set $S_1$ may have the same specifications and the chip inductors $L_2$ of the second set $S_2$ may have the same specifications.

An excitation coil 12 to be shared by the chip inductors $L_1$ of the first set $S_1$ and the chip inductors $L_2$ of the second set $S_2$ to induce voltages in the chip inductors $L_1$, $L_2$ is provided in the printed board 10 of the stator 1. In this example embodiment, the excitation coil 12 includes a first excitation coil 121 and a second excitation coil 122. These excitation coils are provided in the form of conductor patterns in the printed board 10. The first excitation coil 121 is configured in a loop shape (in an annular shape in the illustrated example) so that the chip inductors $L_1$ of the first set $S_1$ and the chip inductors $L_2$ of the second set $S_2$ are located inward of the first excitation coil 121 as seen in plan along the rotation axis 3a. On the other hand, the second excitation coil 122 is configured in a loop shape (in an annular shape in the illustrated example) around the rotation axis 3a so that the second excitation coil 122 is located inward of the conductor targets T1 of the first set S1 and the conductor targets T2 of the second set $S_2$ as seen in plan along the rotation axis 3a. That is, the first excitation coil 121 is disposed radially outward of the chip inductors $L_1$, $L_2$ of the first set $S_1$ and the second set $S_2$, and the second excitation coil 122 is disposed radially inward of the chip inductors $L_1$, $L_2$ of the first set $S_1$ and the second set $S_2$.

The first excitation coil 121 is configured in an annular shape, for example, by forming a spiral wiring pattern circumferentially about the rotation axis 3a. Where the printed board 10 is a multilayer printed board including a plurality of wiring layers stacked one on another, the first excitation coil 121 may be provided by connecting spiral wiring patterns formed in the respective wiring layers together by inter-layer vias. The second excitation coil 122 may be provided in the same manner as the first excitation coil 121.

The first excitation coil 121 and the second excitation coil 122 are connected to each other by a wiring pattern (not shown) in the printed board 10 so that electric current flows through the excitation coil 121 and the excitation coil 122 in opposite directions circumferentially about the rotation axis 3a as seen in plan along the rotation axis 3a. When the first excitation coil 121 and the second excitation coil 122 are energized, therefore, the first excitation coil 121 and the second excitation coil 122 generate magnetic fields in the same direction in a region defined therebetween, i.e., in a region in which the chip inductors $L_1$, $L_2$ of the first set $S_1$ and the second set $S_2$ are located. That is, the first excitation coil 121 and the second excitation coil 122 are configured so as to enhance the magnetic fields in the region defined therebetween.

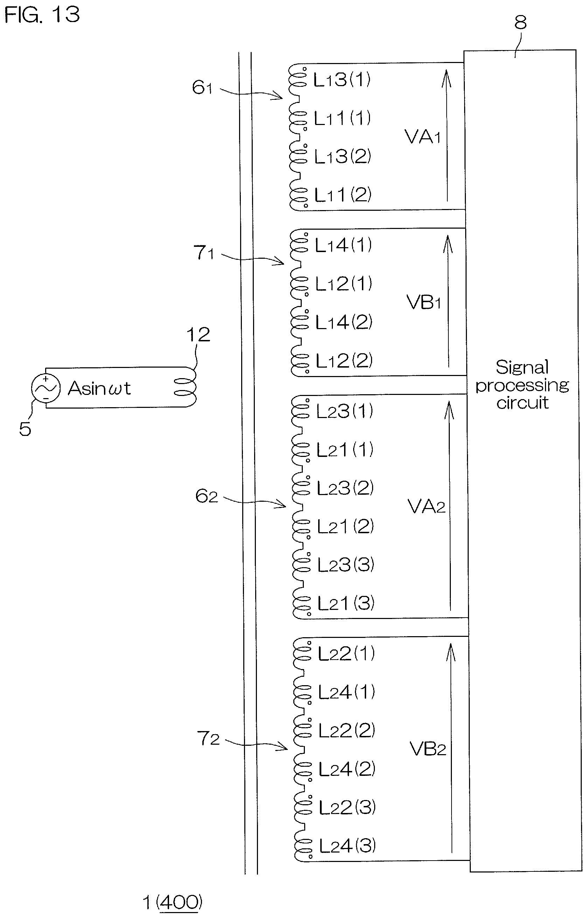

FIG. 13 is an electrical circuit diagram showing the equivalent circuit of the stator 1.

The chip inductors $L_1$ of the first set $S_1$ arranged along the first rotation track $O_1$ (on the radially inner side) are connected in the same manner as in the second example embodiment. That is, the two first-phase chip inductors $L_11(1)$, $L_11(2)$ are differentially connected in series to the two third-phase chip inductors $L_13(1)$, $L_13(2)$ to provide an A-phase detection circuit $6_1$. Further, the two second-phase chip inductors $L_12(1)$, $L_12(2)$ are differentially connected in series to the two fourth-phase chip inductors $L_14(1)$, $L_14(2)$ to provide a B-phase detection circuit $7_1$. The A-phase detection circuit $6_1$ and the B-phase detection circuit $7_1$ respectively output detection signals $VA_1$, $VB_1$ that are amplitude-modulated with their phases offset from each other by 90 degrees.

The chip inductors $L_2$ of the second set $S_2$ arranged along the second rotation track $O_2$ (on the radially outer side) are connected in the same manner as described above. That is, the three first-phase chip inductors $L_21(1)$, $L_21(2)$, $L_21(3)$ are differentially connected in series to the three third-phase chip inductors $L_23(1)$, $L_23(2)$, $L_23(3)$ to provide an A-phase detection circuit $6_2$. Further, the three second-phase chip inductors $L_22(1)$, $L_22(2)$, $L_22(3)$ are differentially connected in series to the three fourth-phase chip inductors $L_24(1)$, $L_24(2)$, $L_24(3)$ to provide a B-phase detection circuit $7_2$. The A-phase detection circuit $6_2$ and the B-phase detection circuit $7_2$ respectively output detection signals $VA_2$, $VB_2$ that are amplitude-modulated with their phases offset from each other by 90 degrees.

The detection signals $VA_1$, $VB_1$, $VA_2$, $VB_2$ are properly processed by a signal processing circuit 8 to thereby provide information about the rotational position of the rotor 2. As described above, the number $Y_1$ of the conductor targets $T_1$ of the first set $S_1$ and the number $Y_2$ of the conductor targets $T_2$ of the second set $S_2$ are different from each other. Thus, rotational positions in a wider rotation angle range can be discretely detected as compared with an arrangement utilizing only the detection signals $VA_1$, $VB_1$ or an arrangement utilizing only the detection signals $VA_2$, $VB_2$. In particular, where the number $Y_1$ of the conductor targets $T_1$ of the first set $S_1$ and the number $Y_2$ of the conductor targets $T_2$ of the second set $S_2$ are coprime, one-turn absolute detection can be achieved, in which rotational positions in a one-turn range (a 360-degree range) can be discretely detected by utilizing the detection signals $VA_1$, $VB_1$, $VA_2$, $VB_2$.

Though not shown, a conductor pattern (more specifically, a copper foil pattern) is provided in the printed board 10 of the stator 1 to connect the chip inductors L together to provide the A-phase detection circuits $6_1$, $6_2$ and the B-phase detection circuits $7_1$, $7_2$.

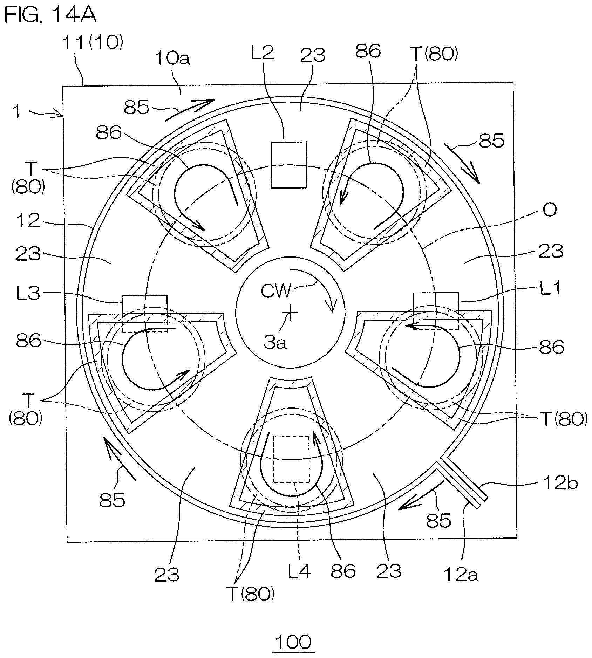

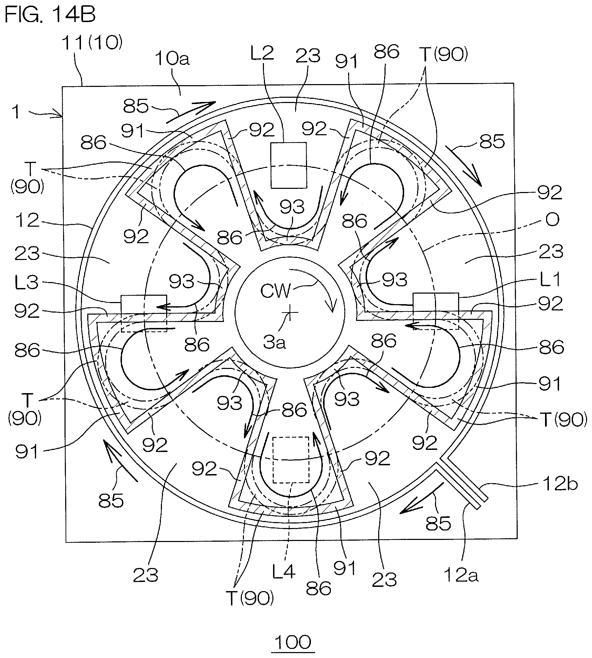

FIGS. 14A and 14B are diagrams that describe other example embodiments. In the example embodiments described above, the conductor targets T are provided in the form of the solid conductor patterns (more specifically, the solid copper foil patterns) provided on the insulative board 21. Alternatively, the conductor targets T may be provided in the form of coil conductor patterns 80, 90 as shown in FIGS. 14A and 14B. In FIGS. 14A and 14B, components corresponding to those shown in FIG. 3 will be denoted by the same reference characters as in FIG. 3.

In the example of FIG. 14A, separate loop coil conductor patterns 80 respectively serving as the conductor targets T are spaced from each other circumferentially about the rotation axis 3a to be thereby isolated from each other. The conductor targets T are constituted by conductor patterns having cyclicity (geometrical periodicity) circumferentially about the rotation axis 3a. In FIG. 14A, the loop coil conductor patterns 80 of the conductor targets T are each configured as a line conductor pattern extending along the outer periphery (contour) of a fan shape defined about the rotation axis 3a (more precisely, a sector shape removed of a radially inner portion). Alternatively, as indicated by a phantom line, the loop coil conductor patterns 80 may be each configured as a conductor pattern in a curved shape (e.g., a round circumferential shape or an oval circumferential shape). By providing the conductor targets T in the form of the curved loop coil conductor patterns 80, the waveforms of the output signals can be each made closer to a sinusoidal waveform. Where the insulative board is a multilayer wiring board, conductor patterns respectively formed in a plurality of conductor layers may be connected to each other to provide a plurality of coils, which may be used as the conductor targets T.

In the example of FIG. 14B, the conductor targets T are connected to each other to form a loop coil conductor pattern 90 extending entirely circumferentially. The loop coil conductor pattern 90 has cyclicity (geometrical periodicity) circumferentially about the rotation axis 3a. More specifically, the loop coil conductor pattern 90 is configured in a repetitive shape having a predetermined number of cycles (five cycles in the example of FIG. 14B) about the rotation axis 3a, and the conductor targets T are each constituted by a one-cycle conductor portion of the loop coil conductor pattern 90. The conductor targets T are each defined by an angular region provided by dividing the entire circumferential angular range (360 degrees) of the loop coil conductor pattern 90 about the rotation axis 3a equiangularly by the number of the cycles (by five in the example of FIG. 14B). Dividing angular positions to be employed to equiangularly divide the loop coil conductor pattern 90 by the number of the cycles may be set in any desired manner.

In the illustrated example, the loop coil conductor pattern 90 includes outer diametrical line conductor patterns 91 each extending along an outer diameter portion of the periphery (contour) of a fan shape (more precisely, a sector shape removed of a radially inner portion, i.e., a portion of the sector shape excluding the radially inner portion) defined about the rotation axis 3a and pairs of radius line conductor patterns 92 each extending along a pair of radius portions of the fan shape, and further includes inner diametrical line conductor patterns 93 each connecting adjacent two of the radius line conductor patterns 92 on an inner diameter side. The outer diametrical line conductor patterns 91 each connect adjacent two of the radius line conductor patterns 92 on an outer diameter side. Each of the radius line conductor patterns 92 is connected to the outer diameter end of another radius line conductor pattern 92 located on one circumferentially adjacent side thereof about the rotation axis 3a via an outer diametrical line conductor pattern 91 on the outer diameter side, and is connected to the inner diameter end of another radius line conductor pattern 92 located on the other circumferentially adjacent side thereof about the rotation axis 3a via an inner diametrical line conductor pattern 93 on the inner diameter side. In this example, the outer diametrical line conductor patterns 91 and the inner diametrical line conductor patterns 93 are each configured in an arcuate line shape defined about the rotation axis 3a. Thus, the loop coil conductor pattern 90 is configured in a circumferentially-continuous endless shape including U-shaped coil portions each opening toward the rotation axis 3a and U-shaped coil portions opening away from the rotation axis 3a. In other words, the loop coil conductor pattern 90 has a zig-zag wavy shape extending back and forth across the rotation track O to the inner diameter side and to the outer diameter side.

As indicated by a phantom line in FIG. 14B, the loop coil conductor pattern 90 may be configured in a curved pattern. By providing the conductor targets T in the form of the curved loop coil conductor pattern 90, the waveforms of the output signals can be each made closer to a sinusoidal waveform.

In the arrangements shown in FIGS. 14A and 14B, the operation principle is the same as in the aforementioned example embodiments. In the arrangements of FIGS. 14A and 14B, however, electric currents flow through the coil conductor patterns 80, 90 of the conductor targets T, while the aforementioned example embodiments utilize the eddy currents flowing through the solid conductor patterns of the conductor targets T. Specifically, an AC excitation current is caused to flow through the excitation coil 12 and, if an excitation current flowing in an arrow direction 85 is increased, electric currents flow through the coil conductor patterns 80, 90 in arrow directions 86 so as to hinder a magnetic field change. Voltages induced in the detection coils of the chip inductors L are influenced by a magnetic field of the excitation coil 12 of the stator 1 and magnetic fields of the coil conductor patterns 80, 90 (conductor targets T) of the rotor 2.

In the arrangement of FIG. 14A, specifically, when the detection coils (chip inductors L) are brought into opposed relation to regions surrounded by the coil conductor patterns 80, the magnetic field of the excitation coil 12 is weakened to reduce the output voltages of the detection coils. Since the opposition regions are changed due to the rotation of the rotor 2, the output voltages of the detection coils are changed. In the arrangement of FIG. 14B, when the detection coils (chip inductors L) are brought into opposed relation to the U-shaped coil portions opening toward the rotation axis 3a, the magnetic field of the excitation coil 12 is weakened. When the detection coils (chip inductors L) are brought into opposed relation to the U-shaped coil portions opening away from the rotation axis 3a, on the other hand, the magnetic field of the excitation coil 12 is enhanced. Then, the output voltages of the detection coils are changed according to the change of the opposition regions.

Thus, the rotational position of the rotor 2 can be detected by utilizing the magnetic field change occurring due to the electric currents flowing through the coil conductor patterns 80, 90. By utilizing the electric currents flowing through the coil conductor patterns 80, 90, the detection can be more advantageously achieved than by utilizing the eddy currents flowing through the solid conductor patterns.

The arrangements previously described with reference to FIGS. 14A and 14B are applicable not only to the first example embodiment but also to the second, third and fourth example embodiments.

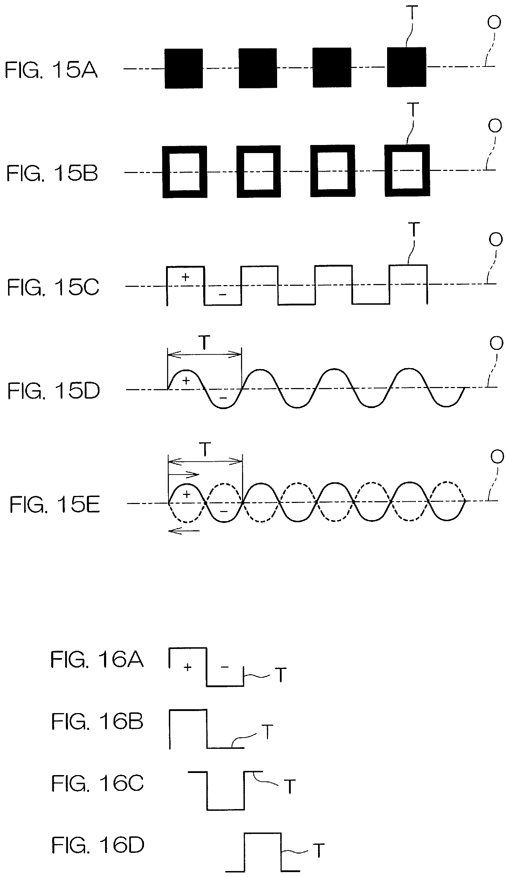

FIGS. 15A to 15E show various examples of the conductor targets T, each showing the layout of the conductor targets T along the rotation track O observed when the rotation track O is expanded circumferentially linearly. FIG. 15A shows the layout of the conductor targets T provided in the form of the separate solid conductor patterns equidistantly arranged. The arrangements shown in FIGS. 1, 3, 6, 7, 9, 11, 12 and the like correspond to this layout. FIG. 15B shows the layout of the conductor targets T provided in the form of the separate loop coil conductor patterns equidistantly arranged. The arrangement shown in FIG. 14A corresponds to this layout.

FIG. 15C shows an example of the layout of the conductor patterns T provided in the form of the loop coil conductor pattern extending entirely circumferentially. The arrangement shown in FIG. 14B corresponds to this layout. In this case, as described above, the conductor targets T are provided by dividing the loop coil conductor pattern equiangularly entirely circumferentially about the rotation axis 3a by the number of the cycles. Since the dividing positions may be set in any desired manner, the conductor targets T may each have any of various one-cycle configurations, for example, shown in FIGS. 16A, 16B, 16C and 16D.

FIG. 15D shows an example of the layout of the conductor patterns T provided in the form of the curved loop coil conductor pattern. The arrangement indicated by the phantom line in FIG. 14B corresponds to this layout. The conductor targets T are each defined by a one-cycle portion of the curved loop coil conductor pattern. In the arrangement of FIG. 14B, for example, loop coil conductor patterns may be provided in a staggered manner on opposite surfaces of the insulative board. In this case, an exemplary layout of the conductor targets T is shown in FIG. 15E.

The conductor targets T are each defined by a one-cycle conductor portion of the cyclic (geometrically periodic) conductor pattern provided circumferentially about the rotation axis 3a (along the rotation track O). In the examples shown in FIGS. 15A and 15B, the one-cycle conductor portion is each of the separate conductor patterns. In the examples shown in FIGS. 15C to 15E, the one-cycle conductor portion is a part of the continuous conductor pattern.

While the example embodiments of the present invention have thus been described, the invention may be embodied in some other ways.

In the example embodiments described above, the chip inductors L are arranged entirely circumferentially about the rotation axis 3a by way of example, but the chip inductors L may be arranged only in a certain angular range region defined about the rotation axis 3a. In the second example embodiment shown in FIGS. 6, 7 and 8, for example, the chip inductors L1(2), L2(2), L3(2), L4(2) may be eliminated.

In the example embodiments described above, the chip inductors L are equidistantly arranged entirely circumferentially about the rotation axis 3a by way of example, but the chip inductors L are not necessarily required to be arranged equidistantly. In the second example embodiment shown in FIGS. 6, 7 and 8, for example, the chip inductors may be arranged non-equidistantly by eliminating one of the first-phase chip inductors L1(1), L1(2), eliminating one of the second-phase chip inductors L2(1), L2(2), eliminating one of the third-phase chip inductors L3(1), L3(2) and eliminating one of the fourth-phase chip inductors L4(1), L4(2). Even in this case, the detection signals VA, VB with a phase difference of 90 degrees can be provided.

In the example embodiments described above, the chip inductors L are surface-mounted on the one major surface 10a of the printed board 10 of the stator 1 by way of example. Alternatively, a plurality of chip inductors L may be surface-mounted on the one major surface 10a of the printed board 10 and another plurality of chip inductors L may be surface-mounted on the other major surface 10b of the printed board 10. By thus mounting the chip inductors L dividedly on the opposite major surfaces of the printed board 10, the number of the chip inductors L can be increased, for example, to be doubled. As the number of the chip inductors L increases, the total turn number is increased, making it possible to increase the outputs. Further, as the number of the chip inductors L increases, variations among the chip inductors L are leveled off, making it possible to increase the detection accuracy. On each of the one major surface 10a and the other major surface 10b of the printed board 10, the distances from the chip inductors L to the conductor targets T are equal to each other, so that the outputs of the chip inductors L disposed on each of the major surfaces 10a, 10b can be leveled off. This obviates the need for complicated signal processing.

In the fourth example embodiment described above, the two-track configuration is shown in which the two sets of conductor targets and chip inductors are respectively arranged along the two rotation tracks by way of example, but three or more tracks may be employed along which three sets of conductor targets and chip inductors are respectively arranged.

In the first, second and fourth example embodiments, the excitation coil is configured in the annular shape by way of example, but the excitation coil may have some other loop shape such as a polygonal loop shape.

In the example embodiments described above, the multilayer chip inductors are used by way of example, but chip inductors of wire wound type may be used. However, the multilayer chip inductors allow for a smaller-size configuration. Therefore, the use of the multilayer chip inductors is more advantageous in order to reduce the conductor target pitch (i.e., to increase the number of the conductor targets) to achieve the detection of the position at a higher resolution. More specifically, even if the conductor targets each have a width of about 2 mm as measured along the rotation track, the position detector can be provided by using multilayer chip inductors each having a width of about 1 mm (preferably by arranging the multilayer chip inductors entirely circumferentially on the rotation track) .

While the present invention has been described in detail by way of the example embodiments thereof, it should be understood that these example embodiments are merely illustrative of the technical principles of the present invention but not limitative of the invention. The scope of the present invention is to be limited only by the appended claims.

DESCRIPTION OF REFERENCE CHARACTERS

1: Stator

    10: Printed board
    12: Excitation coil

2: Rotor

    20: Printed board
    21: Insulative board
    23: Non-conductive portion

3: Rotation shaft
3a: Rotation axis
31, 32: Connection electrode
5: Excitation source
51: First excitation source
52: Second excitation source
6: A-phase detection circuit
7: B-phase detection circuit
$6_1$: A-phase detection circuit
$7_1$: B-phase detection circuit
$6_2$: A-phase detection circuit
$7_2$: B-phase detection circuit
8: Signal processing circuit
12: Excitation coil

    121: First excitation coil
    122: Second excitation coil

60: A-phase AC bridge circuit

    61: First A-phase AC voltage application terminal
    62: Second A-phase AC voltage application terminal
    63: First A-phase signal detection terminal
    64: Second A-phase signal detection terminal

70: B-phase AC bridge circuit

    71: First B-phase AC voltage application terminal
    72: Second B-phase AC voltage application terminal
    73: First B-phase signal detection terminal
    74: Second B-phase signal detection terminal

80: Loop coil conductor pattern
90: Loop coil conductor pattern
100: Inductive position detector
200: Inductive position detector
300: Inductive position detector
400: Inductive position detector
T: Conductor target
O: Rotation track
λ: Conductor target pitch
p: Chip inductor pitch
L1: First-phase chip inductor
L2: Second-phase chip inductor
L3: Third-phase chip inductor
L4: Fourth-phase chip inductor
L1(1), L1(2): First-phase chip inductor

L2(1), L2(2): Second-phase chip inductor
L3(1), L3(2): Third-phase chip inductor
L4(1), L4(2): Fourth-phase chip inductor
G1: First phase group
G2: Second phase group
G3: Third phase group
G4: Fourth phase group
$O_1$: First rotation track
$O_2$: Second rotation track
$T_1$: Conductor target
$T_2$: Conductor target
$L_1 1(1)$, $L_1 1(2)$: First-phase chip inductor
$L_1 2(1)$, $L_1 2(2)$: Second-phase chip inductor
$L_1 3(1)$, $L_1 3(2)$: Third-phase chip inductor
$L_1 4(1)$, $L_1 4(2)$: Fourth-phase chip inductor
$L_2 1(1)$, $L_2 1(2)$, $L_2 1(3)$: First-phase chip inductor
$L_2 2(1)$, $L_2 2(2)$, $L_2 2(3)$: Second-phase chip inductor
$L_2 3(1)$, $L_2 3(2)$, $L_2 3(3)$: Third-phase chip inductor
$L_2 4(1)$, $L_2 4(2)$, $L_2 4(3)$: Fourth-phase chip inductor
$S_1$: First set
$S_2$: Second set

**Claims**

1. An inductive position detector comprising:

   a stator having a wiring board;
   a rotor having a non-conductive component disposed in opposed relation to the stator and rotatable relative to the stator about a predetermined rotation axis;
   a plurality of conductor targets having the same shape and the same size and held by the non-conductive component of the rotor to be cyclically arranged circumferentially about the rotation axis, the conductor targets being movable to pass through a rotation track defined about the rotation axis as the rotor is rotated; and
   a plurality of chip inductors surface-mounted on a major surface of the wiring board of the stator in opposed relation to the rotation track so as to have different spatial phases with respect to the conductor targets, and respectively serving as detection coils that detect a magnetic field change occurring due to the passage of the conductor targets.

2. The inductive position detector according to claim 1,

   wherein the conductor targets are arranged at a predetermined conductor target pitch along the rotation track,
   wherein the chip inductors each have a coil width that is 25% to 75% of the conductor target pitch as measured along the rotation track.

3. The inductive position detector according to claim 1 or 2,

   wherein the conductor targets are arranged at the predetermined conductor target pitch along the rotation track,
   wherein the chip inductors include at least one first-phase chip inductor, at least one second-phase chip inductor, at least one third-phase chip inductor and at least one fourth-phase chip inductor which are arranged with a phase difference of one fourth the conductor target pitch.

4. The inductive position detector according to any one of claims 1 to 3,

   wherein the chip inductors include 4N chip inductors (wherein N is a natural number) arranged equidistantly along the rotation track entirely circumferentially of the rotation track,
   wherein a number Y of the conductor targets (wherein Y is a natural number) satisfies the following expression: $Y = 4NM \pm N$ (wherein M is a natural number).

5. The inductive position detector according to any one of claims 1 to 4,

wherein a first set of the chip inductors and the conductor targets employ a first rotation track as the rotation track, a second set of the chip inductors and the conductor targets employ a second rotation track different from the first rotation track as the rotation track, and the first set and the second set are provided so as to share the stator and the rotor,
wherein a number $Y_1$ (wherein $Y_1$ is a natural number) of the conductor targets of the first set and a number $Y_2$ (wherein $Y_2$ is a natural number) of the conductor targets of the second set are different from each other.

6. The inductive position detector according to claim 5, wherein the number $Y_1$ of the conductor targets of the first set and the number $Y_2$ of the conductor targets of the second set are coprime.

7. The inductive position detector according to claim 5 or 6 further comprising an excitation coil provided in the wiring board of the stator and shared by the chip inductors of the first set and the chip inductors of the second set to induce voltages in the chip inductors of the first set and the chip inductors of the second set.

8. The inductive position detector according to claim 7, wherein the excitation coil includes a loop-shaped first excitation coil provided so that the chip inductors of the first set and the chip inductors of the second set are located inward of the first excitation coil as seen along the rotation axis, and a loop-shaped second excitation coil provided around the rotation axis so that the second excitation coil is located inward of the chip inductors of the first set and the chip inductors of the second set as seen along the rotation axis.

9. The inductive position detector according to any one of claims 1 to 8, wherein the conductor targets include solid conductor patterns or loop-shaped coil conductor patterns provided on the non-conductive component, and the conductor targets are isolated from each other.

10. The inductive position detector according to any one of claims 1 to 8, wherein the conductor targets are connected to each other to provide a loop-shaped coil conductor pattern extending entirely circumferentially .

11. The inductive position detector according to any one of claims 1 to 10, wherein the chip inductors are multilayer chip inductors each having a pair of connection electrodes provided on opposite ends thereof.

12. The inductive position detector according to any one of claims 1 to 11 further comprising an excitation coil provided in the wiring board of the stator to generate a magnetic field to induce voltages in the chip inductors,and configured in a loop shape such that the chip inductors are located inward of the excitation coil as seen along the rotation axis.

13. The inductive position detector according to any one of claims 1 to 12, wherein the chip inductors are connected together to configure an AC bridge circuit having a pair of AC voltage application terminals and a pair of signal detection terminals.

FIG. 1

FIG. 2

FIG. 3

100

FIG. 4

6

8

12

L1
(A-phase)

L3
(Ā-phase)

VA

Signal
processing
circuit

5

Asin ωt

L2
(B-phase)

L4
(B̄-phase)

VB

1(100)

7

FIG. 5A

Asin ωt

FIG. 5B

VA

FIG. 5C

VB

FIG. 6

200

FIG. 7

200

FIG. 8

FIG. 9

300

FIG. 10

FIG. 11

400

FIG. 12

EP 4 542 177 A1

400

FIG. 13

1(400)

FIG. 14A

100

FIG. 14B

100

FIG. 15A

FIG. 15B

FIG. 15C

FIG. 15D

FIG. 15E

FIG. 16A

FIG. 16B

FIG. 16C

FIG. 16D

| INTERNATIONAL SEARCH REPORT | International application No. |
| --- | --- |
| | **PCT/JP2023/021804** |

**A.    CLASSIFICATION OF SUBJECT MATTER**

*G01D 5/20*(2006.01)i
FI:    G01D5/20 110H; G01D5/20 110F

According to International Patent Classification (IPC) or to both national classification and IPC

**B.    FIELDS SEARCHED**

Minimum documentation searched (classification system followed by classification symbols)

G01D5/00-5/252

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2017-531187 A (ROBERT BOSCH GMBH) 19 October 2017 (2017-10-19) paragraphs [0015]-[0019], fig. 1-3 | 1-2, 9-12 |
| A | | 3-8, 13 |
| Y | JP 2022-68860 A (RENESAS ELECTRONICS AMERICA INC.) 10 May 2022 (2022-05-10) paragraphs [0038], [0039], fig. 1 | 1-2, 9-12 |
| Y | JP 2014-167440 A (AISIN SEIKI CO., LTD.) 11 September 2014 (2014-09-11) paragraph [0031] | 1-2, 9-12 |
| Y | JP 4-278416 A (MATSUSHITA ELECTRIC IND. CO., LTD.) 05 October 1992 (1992-10-05) paragraph [0015] | 1-2, 9-12 |
| Y | JP 2015-227826 A (TOKAI RIKA CO., LTD.) 17 December 2015 (2015-12-17) paragraphs [0015]-[0020], fig. 2 | 10-12 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 August 2023** | **15 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/021804**

| Patent document cited in search report | | | Publication date (day/month/year) | Patent family member(s) | | | Publication date (day/month/year) |
|---|---|---|---|---|---|---|---|
| JP | 2017-531187 | A | 19 October 2017 | WO | 2016/055300 | A1 | |
| | | | | EP | 3204727 | A1 | |
| | | | | DE | 102014220458 | A1 | |
| | | | | CN | 106796119 | A | |
| JP | 2022-68860 | A | 10 May 2022 | US | 2022/0128381 | A1 | |
| | | | | paragraphs [0082], [0083], fig. 1 | | | |
| | | | | EP | 3988903 | A1 | |
| | | | | CN | 114383637 | A | |
| JP | 2014-167440 | A | 11 September 2014 | (Family: none) | | | |
| JP | 4-278416 | A | 05 October 1992 | (Family: none) | | | |
| JP | 2015-227826 | A | 17 December 2015 | (Family: none) | | | |

Form PCT/ISA/210 (patent family annex) (January 2015)

**EP 4 542 177 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022095845 A
- JP S61 A
- JP 159101 A
- JP 5226694 B
- JP 5300164 B
- JP 2021056176 A
- JP 2000049014 A